(19) Europäisches Patentamt

European Patent Office

Office européen des brevets

(11) **EP 1 298 780 B1**

(12) **EUROPEAN PATENT SPECIFICATION**

(45) Date of publication and mention
of the grant of the patent:
**22.11.2006 Bulletin 2006/47**

(51) Int Cl.:
***H02M 7/5387*** (2006.01)

(21) Application number: **01929999.9**

(86) International application number:
**PCT/JP2001/003866**

(22) Date of filing: **09.05.2001**

(87) International publication number:
**WO 2001/086791 (15.11.2001 Gazette 2001/46)**

(54) **X-RAY GENERATOR AND X-RAY CT APPARATUS COMPRISING THE SAME**

RÖNTGENGENERATOR UND DENSELBIGEN ENTHALTENDE RÖNTGEN-CT-VORRICHTUNG

GENERATEUR DE RAYONS X ET APPAREIL DE TOMODENSITOMETRIE (CT) A RAYONS X DANS LEQUEL IL EST INTEGRE

(84) Designated Contracting States:
**AT BE CH CY DE DK ES FI FR GB GR IE IT LI LU MC NL PT SE TR**

(30) Priority: **10.05.2000 JP 2000136929**
**25.09.2000 JP 2000291256**
**09.02.2001 JP 2001033733**
**16.03.2001 JP 2001076218**

(43) Date of publication of application:
**02.04.2003 Bulletin 2003/14**

(73) Proprietor: **HITACHI MEDICAL CORPORATION**
**Tokyo 100-0047 (JP)**

(72) Inventors:
• **TAKANO, Hiroshi**
**Kitasoma-gun, Ibaraki 302-0115 (JP)**
• **TAKAHASHI, Jun**
**Nagareyama-shi, Chiba 270-0143 (JP)**
• **DOMOTO, Takuya**
**Noda-shi, Chiba 278-0022 (JP)**
• **IIJIMA, Hirokazu**
**Abiko-shi, Chiba 270-1163 (JP)**

(74) Representative: **Strehl Schübel-Hopf & Partner**
**Maximilianstrasse 54**
**80538 München (DE)**

(56) References cited:
**WO-A-92/05625          JP-A- 6 022 551**
**JP-A- 7 065 987**

• **PATENT ABSTRACTS OF JAPAN vol. 2000, no. 03, 30 March 2000 (2000-03-30) & JP 11 341832 A (SHIKOKU HENATSUKI KK), 10 December 1999 (1999-12-10)**
• **PATENT ABSTRACTS OF JAPAN vol. 0182, no. 34 (E-1543), 28 April 1994 (1994-04-28) & JP 06 022551 A (HITACHI MEDICAL CORP), 28 January 1994 (1994-01-28)**
• **PATENT ABSTRACTS OF JAPAN vol. 1995, no. 06, 31 July 1995 (1995-07-31) & JP 07 065987 A (HITACHI MEDICAL CORP), 10 March 1995 (1995-03-10)**
• **DE DONCKER R W ET AL: "The auxiliary resonant commutated pole converter" CONFERENCE RECORD OF THE INDUSTRY APPLICATIONS SOCIETY ANNUAL MEETING. SEATTLE, OCT. 7 - 12, 1990, NEW YORK, IEEE, US, vol. VOL. 2 MEETING 25, 7 October 1990 (1990-10-07), pages 1228-1235, XP010034859 ISBN: 0-87942-553-9**

**Description**

Technical Field

This invention relates to an X-ray generator and an X-ray computerized tomographic imaging apparatus (hereinafter referred to as X-ray CT apparatus). More particularly, the invention relates to an X-ray generator of a high efficiency for producing a large output and to an X-ray CT apparatus which employs the X-ray generator to effect the scanning at a high speed while allowing a decreased number of maintenance manpower and a decreased installation space.

Background Art

An X-ray CT apparatus irradiates a subject with a fan-shaped X-ray beam emitted from an X-ray tube, detects the X-ray that has transmitted through the subject by using an X-ray detector arranged at a position facing the X-ray tube, and obtains a tomographic image of the subject by processing the image of the detected data.

The X-ray detector is constituted by hundreds of detecting element groups arranged in an arcuate shape, and is arranged facing the X-ray tube with the subject interposed therebetween, forms radially distributed X-ray paths of a number corresponding to the number of the detecting elements, and permits the X-ray tube and the X-ray detector together to rotate about the subject to detect the X-rays transmitted through the subject for every predetermined angle.

Owing to such features as "scanning is possible within a short period of time over a wide range" and "data are continuously obtained in the longitudinal direction of the body enabling a three-dimensional image to be formed" of the X-ray CT apparatus, in recent years, there have been widely used spiral CTs called helical scan and spiral scan.

In the spiral CTs, the X-ray tube and the X-ray detector are continuously rotated and, at the same time, a bed on which the subject is placed is continuously moved in the longitudinal direction of the subject, so that the X-ray tube and the X-ray detector undergo a spiral motion relative to the subject. While the spiral scan is imaging as described above, the imaging position is changed in parallel with the continuous rotational scanning, enabling the imaging time to be shortened as a whole. Further, the continuous scanning is effected in the longitudinal direction of the body, too, during the imaging, so that three-dimensional data can be collected.

To realize the spiral scan, a scanner rotary plate supporting the X-ray tube and the X-ray detector must be continuously rotated necessitating means for continuously supplying an electric power to the X-ray tube mounted on the scanner rotary plate. As this means, there is used a power transfer device comprising slip rings and brushes, and on the scanner rotary plate are mounted the X-ray tube as well as a high-voltage generator for applying a high voltage (hereinafter, this voltage is called tube voltage) to the X-ray tube and, besides, an electric power for generating a required X-ray is fed from the X-ray tube to the high-voltage generator through the power transfer device.

Thus, the high-voltage generator is rotated at a high speed being mounted on the scanner rotary plate, and is better as light in weight as possible. As the X-ray high-voltage generator, therefore, there is used an inverter type X-ray high-voltage generator which enables a high-voltage transformer in the high-voltage generator to be realized in a small size and in a reduced weight and makes it possible to decrease ripples in the tube voltage.

The inverter type X-ray high-voltage generator is so constituted that a commercial AC power source is converted into a DC voltage through a converter, the DC voltage is converted into an AC voltage of a frequency higher than the frequency of the commercial power source through an inverter, the AC voltage of this high frequency is boosted through a high-voltage transformer, the boosted AC high voltage is rectified into a DC high voltage through a high-voltage rectifier, and the DC high voltage is applied to an X-ray tube to generate X-rays. On the scanner rotary plate is mounted a circuit that follows the high-voltage transformer, i.e., is mounted a high-voltage generator, and the output of the inverter is fed as a required electric power to the high-voltage transformer through the power transfer device comprising slip rings and brushes.

In order to decrease the size of the high-voltage transformer and to decrease ripples in the voltage waveform of the tube, the operation frequency of the inverter is increased to be not lower than 20 kHz.

As described above, the spiral CT effects the scanning continuously and, hence, requires an extended imaging time. In recent years, furthermore, it is a tendency to effect the scanning at an ever high speed to get rid of motion artifact and to further diagnose even the heart, and it has been urged to shorten the time for one scanning to be not longer than 0.5 seconds.

In order to shorten the time for one scanning to be 0.5 seconds, therefore, the scanner must be rotated once in 0.5 seconds. As compared to the conventional devices of lower speeds, therefore, the X-ray dose per a unit time must be increased in inverse proportion to the rotational time of the scanner.

That is, in order to obtain a good tomographic image with less granular noise, an electric current (hereinafter called tube current) flowing across the anode and the cathode of the X-ray tube must be increased in inverse proportion to the scanner rotational speed in order to generate the X-rays in a sufficient dose so as to fall on the subject. Therefore, the tube current must be increased compared to that of the prior art. Due to an increase in the tube current resulting from an increase in the scanning speed and due to an increase in the imaging time resulting from the spiral scan, therefore, it is necessary to employ an X-ray tube of an increased capacity and, hence, it is becoming necessary to use the inverter type X-ray high-voltage generator of a large output to supply electric power to the X-ray tube.

Concretely speaking, it is necessary to use the X-ray high-voltage generator capable of continuously producing an electric power of 60 kW for not shorter than one minute, and the inverter must produce a large current, as a matter of course. The following problem arouses if the electric power is fed to the high-voltage generator mounted on the scanner rotary plate through the power transfer device comprising slip rings and brushes in a traditional manner. Namely, the slip rings must supply a large current to the brushes while slipping thereon at high speeds, whereby the contact surfaces thereof generate heat and develop chaps and scorches. Therefore, the surfaces of the slip rings must be regularly polished and the brushes must be renewed, involving difficulty for maintaining reliability.

Besides, when the inverter and the high voltage generator mounted on the scanner rotary plate are located being separated away from each other, a large current of 20 kHz flows through the electric conductor connecting them together, whereby induced noise generates and may enter into peripheral equipment, necessitating cumbersome countermeasures. The problem of wear of the slip rings and of the brushes and the problem of induced noise, appear to a small degree when a current to be transferred is small and when the current has a low frequency.

It therefore becomes necessary to heighten the efficiency of the X-ray generator as a whole by lowering the losses in the circuits and to lower the frequency of the current transferred through the power transfer device. Therefore, it is necessary to heighten the efficiency of means that generates a large current of 20 kHz in the inverter type X-ray high-voltage generator, i.e., to heighten the efficiency of the converter that converts the commercial AC power source into a DC voltage and of the inverter that converts the DC output voltage of the converter into an AC voltage of 20 kHz. First, the converter is, so far, employing a known power semiconductor element such as diode or thyristor to effect the full-wave rectification, producing a difference in phase between the phase voltage and the phase current of the commercial power source input to the converter. Therefore, the reactive power increases and the power conversion efficiency decreases. Therefore, increased currents inevitably flow into the converter and inverter, and it is necessary to employ a commercial power source facility of a large capacity.

Next, the inverter is constituted by a power semiconductor switching element. The switching element, however, produces a switching loss due to the product of a voltage applied to the switching element and a current flowing into the switching element during the turn-on operation for changing the switching element from the non-conducting state over to the conducting state and during the turn-off operation for changing the switching element from the conducting state over to the non-conducting state. During the conducting state, further, a continuity loss generates due to the product of a current flowing into the switching element and a voltage drop across the switching element. In this case, the inverter is not accompanied by any serious problem since its switching loss lies within a given range when it is operated on a DC voltage of about 200 V to 450 V that is obtained by rectifying the full waves of a commercial AC power source voltage of 200 V or 400 V like in the conventional converter mentioned above. In order to efficiently operate the high-voltage transformer and the inverter that supplies electric power thereto, however, the DC input voltage to the inverter must be increased and the current flowing into the inverter must be decreased. For this purpose, however, the DC input voltage must be raised up to about 600 V to 800 V. If the inverter is operated while increasing the DC input voltage to the inverter circuit, then, the continuity loss decreases by an amount by which the current is decreased in the conducting state. However, the switching loss increases nearly in proportion to the operation voltage thereof. Therefore, the switching loss must be suppressed by contriving a particular means. An inverter type X-ray high voltage generator that decreases the switching loss has been disclosed in Japanese Patent Laid-Open No. 22551/1994. Namely, diodes are connected in parallel with the switching elements constituting the inverter in a manner that the polarities thereof are opposite to those of the switching elements, so that an inverse voltage of not smaller than a rated value will not be applied thereto. The above Japanese Patent Laid-Open No. 22551/1994 teaches a switching method of turning the switching elements on and off by flowing a current to the diodes (hereinafter, this current is called auxiliary current, and the circuit for flowing the auxiliary current is called auxiliary circuit) in a manner that the voltage applied to the switching element becomes nearly zero at the time when it is changed over (this switching system is hereinafter called soft switching system by zero voltage turn-on/turn-off). This method makes it possible to greatly decrease the switching loss. However, since the auxiliary current is supplied from the DC input power source of the inverter through an inductor (hereinafter this inductor is calledauxiliary inductor) , a large inverter current flows in the inverter type X-ray high-voltage generator of large output. Accordingly, a large current flows into the auxiliary inductor, and the loss of the auxiliary inductor becomes no longer negligible. A method of solving this problem has been disclosed in R.W. De Doncker, et al.: "The Auxiliary Resonant Commutated Pole Converter", IEEE-IAS, 1990, pp. 1228-1235 and WO92/05625 and JP-A-11-341832. According to this method, a bidirectional semiconductor switch (hereinafter, the bidirectional switch is called auxiliary switch) is connected in series with the auxiliary inductor, and is opened and closed to flow the auxiliary current only when it is needed, i.e., only when the switching element of the inverter is to be turned on and off. Upon operating the auxiliary circuit as described above, there is no need of flowing the current to the auxiliary inductor at all times, and the loss of the auxiliary inductor greatly decreases. Upon employing a soft switching system based on the zero-voltage turn-on by using the auxiliary switch, however, a large voltage generates in the auxiliary circuit when the auxiliary switch is turned off in a state where a current is flowing into the auxiliary inductor while the inverter is not in operation after the completion of the X-ray irradiation or is brought into a halt unexpectedly, causing the auxiliary switch to be broken or, depending upon the cases, causing the switching elements in the inverter and the related circuit components to be broken, which is a drop in the reliability of the apparatus.

In order to decrease the installation space, furthermore, it has been desired to constitute the X-ray CT apparatus in three units only by incorporating a scanner, a table and an operation desk incorporating the image processing unit.

To meet this requirement, making the X-ray high-voltage generator of a large output in a small size and in a reduced weight and to be mounted on the scanner rotating unit is necessary.

The X-ray generator comprises the converter, inverter, high voltage transformer, high voltage rectifier and X-ray tube, and is mounted on the rotating unit, and receives a centrifugal force which is 6 to 15 times as great as the gravity due to the rotation of the scanner rotating unit. The X-ray generator which operates under such severe conditions has been designed in a small size and in a light weight so as to possess mechanical strength to a sufficient degree. According to the prior art as described above, however, it is difficult to further increase the rotational speed or to further increase the output in inverse proportion to the rotational time. Besides, the anode employed by the X-ray tube is of the rotary drive type to efficiently release by radiation the heat generated on the anode. The anode is driven by a stator coil of the type of an induction motor and a rotor driven at a high speed together with the anode in vacuum in the X-ray tube, which are arranged maintaining a predetermined distance to maintain a breakdown voltage, offering a low drive efficiency and requiring a voltage of usually as high as 500 V to 850 V that is applied to the stator coil. According to the conventional X-ray CT apparatus which operates on an AC power source of 200 V system, however, a high-voltage DC power source is separately provided or a transformer is provided for boosting the voltage prior to supplying a drive voltage to the stator coil, hindering the effort for decreasing the size and for decreasing the weight.

If the X-ray generator is realized in a small size and is mounted on the scanner unit, the installation space can be reduced solving the problem of wear of the slip rings and of the brushes, as well as the problem of induced noise. This invention therefore has objects of:

(1) providing an X-ray generator of a large output by improving the efficiency of elements in the converter and the inverter constituting the X-ray generator, to feed a large current to the X-ray tube to cope with an increase in the scanning speed and to conduct the spiral scan for extended periods of time with the large current;

(2) decreasing the current flowing into the power transfer device comprising the slip rings and the brushes that feed the electric power from the commercial power source to the X-ray generator as a result of improving the efficiency of the X-ray generator, and lowering the frequency of the current in order to decrease the number of maintenance men required by the power transfer device and to improve the reliability of the X-ray CT apparatus; and

(3) realizing the X-ray generator in a small size and in a reduced weight, so that it can be mounted on the scanner rotary plate and that the X-ray CT apparatus is installed in a reduced space.

Disclosure of the Invention

The invention is defined by claim 1. The dependent claims relate to preferred embodiments of the invention. An X-ray generator of an embodiment of the invention comprises:

power transfer means for receiving electric power from an AC power source and for transferring it;
a converter for converting an AC voltage transferred from the power transfer means into a DC voltage;
an inverter for converting the DC voltage converted by the converter into an AC voltage;
a high-voltage transformer for boosting the AC voltage converted by the inverter;
a rectifier for rectifying the AC voltage boosted by the high-voltage transformer into a DC voltage; and
an X-ray tube for radiating X-rays upon being applied with a DC high voltage rectified through the rectifier;
wherein the converter comprises a full-wave rectifier circuit including a self-extinguishing semiconductor switching element, inductors connected in series across the AC input terminals of the full-wave rectifier circuit and the output terminals of the power transfer means, and a converter controller which so controls the self-extinguishing switching element that the phase is brought into agreement between the phase current and the phase voltage of the AC power source and that the output voltage of the full-wave rectifier circuit is brought into agreement with a target voltage; and the inverter comprises zero-voltage switching means for turning the switching element on and off by setting the voltage of the switching element to be nearly zero at the time when the semiconductor switching element constituting the inverter is turned on and off, current free-wheeling means for free-wheeling the current flowing into the zero-voltage switching means when the zero-voltage switching means is shut off, and control means for controlling the timing for turning the switching element of the inverter on and off in response to signals for setting the voltage to be applied to the X-ray tube and for setting the current to be fed to the X-ray tube.

The thus constituted X-ray generator uses a converter disclosed in Japanese Patent Laid-Open No. 65987/1995 as the converter that converts, into a DC voltage, an AC voltage from the power transfer means which receives the electric power from the AC power source and transfers it. The converter includes inductors for each of the phases of the AC power source between the three-phase AC power source and the full-wave rectifier circuit that converts the AC power source into a direct current. The full-wave rectifier circuit is constituted by self-extinguishing switching elements connected in the forward direction between the positive side output terminals of the full-wave rectifier circuit and the inductors and between the negative side output terminals of the full-wave rectifier circuit and the inductors, diodes respectively connected in reverse parallel with these switching elements, and capacitors connected between the positive side output terminals and the negative side output terminals of the full wave rectifier circuit for smoothing the DC voltage rectified by the full-wave rectifier circuit. The switching elements are controlled by pulse width modulation (hereinafter abbreviated as PWM) depending upon a phase difference between the phase current and the phase voltage of the AC power source, and upon a setpoint output voltage of the smoothing capacitor, in order to bring the phase into agreement between the phase current and the phase voltage of the AC power source and to control the output voltage of the smoothing capacitor to be the setpoint value. By using the converter as described above, the phase can be brought into agreement between the phase current and the phase voltage of the AC power source, whereby the power factor is improved, the apparent power decreases, and a decreased current flows into the converter circuit.

The converter controls the self-extinguishing switching element by pulse width modulation, so that the electromagnetic energy is stored in the inductor. The electromagnetic energy is emitted to the smoothing capacitor; i.e., the smoothing capacitor is charged with a voltage higher than the voltage of the AC power source. Namely, the boosting function is provided for boosting the voltage to be higher than the voltage of the AC power source, and the boosted voltage is used as the DC power source of the inverter to decrease the current subsequent to the inverter. This makes it possible to greatly decrease the loss in the switching element of the inverter and the loss in the high voltage transformer.

Further, the inverter comprises a so-called soft switching or zero-voltage switching means for turning the switching element on and off by setting the voltage applied to the switching element of the inverter to be zero, and current free-wheeling means for free-wheeling the current flowing into the zero-voltage switching means when the zero-voltage switching means is shut off, thereby to lower the switching loss of the inverter and to suppress the generation of an overvoltage in the zero-voltage switching means when the switching element in the zero-voltage switching means is shut off, contributing to improving the reliability of the X-ray generator. The output voltage (DC voltage) of the converter in the thus constituted X-ray generator is converted into an AC voltage through a second inverter, the AC voltage is fed to a circuit which rotates the anode of the X-ray tube, the anode rotating circuit is mounted together with the X-ray generator on the scanner rotating unit of the X-ray CT apparatus, and an electric power is transferred to the X-ray generator that is mounted from the AC power source through the power transfer means comprising brushes and slip rings. By being constituted as described above, the X-ray CT apparatus is constituted by three units , i.e., the scanner mounting the X-ray generator, the table mounting the subject and the operation desk including the image processor and the image display, and, hence, requires a decreased installation space.

Besides, a small current flows into the power transfer means comprising the brushes and slip rings , having a commercial frequency of as low as 50 Hz or 60 Hz , suppressing the generation of heat in the power transfer means, causing chaps and scorches to develop little, and making it possible to greatly decrease the number of maintenance men required for polishing the surfaces of the slip rings and renewing the brushes.

Brief Description of the Drawings

Fig. 1 is a diagram illustrating the whole constitution of an X-ray CT apparatus according to the invention;
Fig. 2 is a circuit diagram of an X-ray generator by using a soft switching inverter according to the invention;
Fig. 3 is a diagram illustrating a relationship between the currents flowing into the auxiliary inductors and the timings of the switching elements when the zero-voltage switching means of Fig. 2 is normally operating;
Fig. 4 is a diagram illustrating a relationship between the currents flowing into the auxiliary inductors and the timings of the switching elements when the zero-voltage switching means of Fig. 2 is not normally operating;
Fig. 5 is a diagram illustrating the free-wheeling operation of current free-wheeling means according to the invention of Fig. 2;
Fig. 6 is a diagram illustrating a modified example of the circuit of Fig. 2 and the operation thereof;
Fig. 7 is a circuit diagram illustrating another embodiment of the X-ray generator by using the soft switching inverter of the invention;
Fig. 8 is a circuit diagram illustrating another embodiment of the soft switching inverter of the invention;
Fig. 9 is a circuit diagram illustrating another embodiment of the soft switching inverter of the invention;
Fig. 10 is a circuit diagram illustrating another embodiment of the soft switching inverter of the invention;

Fig. 11 is a diagram illustrating the constitution of a bidirectional switch used in Fig. 10 and the operation thereof ;
Fig. 12 is a diagram illustrating the operation of the soft switching inverter of the invention of Fig. 10; and
Fig. 13 is a circuit diagram illustrating another embodiment of the soft switching inverter of the invention.

Best Mode for Carrying Out the Invention

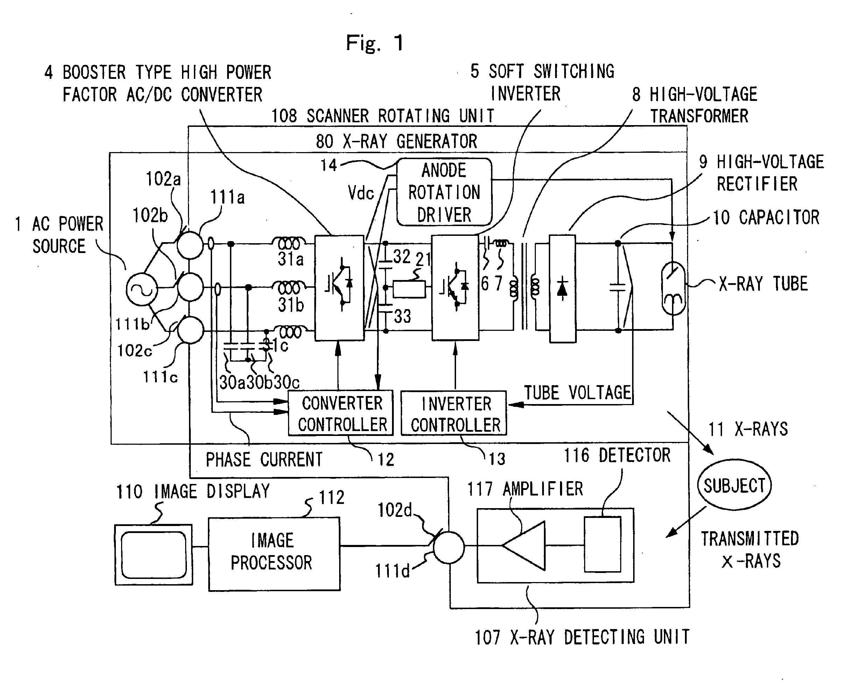

Fig. 1 is a diagram illustrating the constitution of an X-ray CT apparatus mounting, on a scanner rotating unit, an X-ray generator which comprises a power transfer device constituted by slip rings and brushes for feeding an AC electric power of an AC power source through the same power source, a pulse width modulated AC/DC converter equipped with boosting and high power factor functions (hereinafter called booster type high power factor AC/DC converter), a soft switching inverter equipped with zero-voltage turn-on/turn-off means, a high-voltage transformer and an X-ray tube.

In Fig. 1, reference numeral 1 denotes a three-phase AC power source of a frequency of 50 Hz or 60 Hz, reference numerals 102a, 102b and 102c denote brushes connected to the AC power source 1 and for transferring an AC voltage thereof to a rotary unit 108 of a scanner, reference numerals 111a, 111b and 111c denote slip rings that rotate together with the scanner rotary unit 108 while coming in contact with the brushes 102a, 102b and 102c. The brushes 102a, 102b, 102c and the slip rings 111a, 111b, 111c constitute a power transfer mechanism. Reference numerals 30a to 30c denote capacitors connected to the phases of alternating currents fed from the slip rings 111a, 111b, 111c so that the voltage ripples of high frequencies are not transferred to the AC power source side, 31a to 31c denote inductors inserted in series with the phases of the AC power source 1, reference numeral 4 denotes a booster type high power factor AC/DC converter connected to the inductors 31a to 31c, and 5 denotes a soft switching inverter for converting the DC output voltage of the AC/DC converter 4 into an alternating current of a high frequency. To the soft switching inverter 5 are connected an auxiliary circuit 21 for flowing an auxiliary current, and capacitors 32, 33, the capacitors 32 and 33 being connected on the DC side of the AC/DC converter 4. A capacitor 6 is connected to the output side of the soft switching inverter 5, an inductor 7 is connected in series with the capacitor 6, and a resonance circuit is constituted by the capacitance of the capacitor 6 and the inductance of the inductor 7. A high-voltage transformer 8 is connected to the capacitor 6 and to the inductor 7. The output voltage of the inverter 5 is boosted through the transformer 8, and the output is insulated. A high-voltage rectifier 9 rectifies the full waves of the output voltage of the transformer 8 to convert the output into a direct current, and an X-ray tube 11 for generating X-rays is connected as a load to the output side thereof.

Reference numeral 10 denotes an electrostatic capacitance of a high-tension cable for applying the output voltage of the rectifier 9 to the X-ray tube 11, and for smoothing the output from the rectifier 9. The inductor 7 needs not necessarily be provided if a resonance operation is realized by the leakage inductance of the high-voltage transformer 8 and the capacitance of the capacitor 6 only. The capacitor 6 is inserted so that the current of a high frequency will not flow in large amounts into the winding of the high-voltage transformer 8 being affected by the leakage inductance of the high-voltage transformer 8. The capacitor 6 needs not be inserted if it is not needed.

Reference numeral 12 denotes a converter controller for controlling the booster type high power factor AC/DC converter 4 while detecting currents fed to the AC/DC converter 4 through slip rings 111a, 111b, 111c and detecting the DC output voltage of the converter 4 , and reference numeral 13 denotes an inverter controller which detects and inputs a DC high voltage (tube voltage) fed to the X-ray tube 11 and so controls the soft switching inverter 5 that the detected tube voltage becomes a desired voltage. Reference numeral 14 denotes an anode rotating circuit which is connected to the output side of the booster type high power factor AC/DC converter 4, generates an alternating current of about 50 Hz to 200 Hz from the DC voltage Vdc, and rotates the anode of the X-ray tube 11, and has a function similar to that of an ordinary inverter for induction motors. The X-ray generator 80 is constituted as described above, and the X-rays radiated from the X-ray tube 11 transmit through a subject 109 and are detected by a detector 116 that constitutes an X-ray detecting unit 107, and are amplified through an amplifier 117. Reference numeral 111d denotes a slip ring mounted on the scanner rotary unit 108, reference numeral 102d denotes a brush for transferring the X-ray detection signal output from the amplifier 117 while in contact with the slip ring 111d, reference numeral 112 denotes an image processor for forming a tomographic image from the X-ray detection signal transferred through the brush, and reference numeral 110 denotes an image display connected to the image processor 112 and for displaying the tomographic image that is formed. The X-ray generator 80 and the X-ray detecting unit 107 are mounted on the scanner rotating unit 108. The X-ray CT apparatus is constituted by three units, i.e., the scanner rotating unit 108, a bed that is not shown for placing the subject 109, and an operation desk that is not shown but is including the image processor 112 and the image display 110.

Next, described below is the operation of the X-ray generator used for the thus constituted X-ray CT apparatus.

<Booster Type High Power Factor AC/DC Converter>

The booster type high power factor AC/DC converter 4 is such that the input currents to the slip rings 111a, 111b, 111c are sine waves, the phases are brought into agreement with the voltages input to the slip rings so that the power factor is nearly 1, and that the DC output voltage Vdc is higher than a peak value of the voltage of the AC power source 1. Namely, it has a function for enhancing the power factor and the voltage . The constitution and operation of when the AC/DC converter having these functions is adapted to the X-ray high-voltage generator, have been disclosed in Japanese Patent Laid-Open No. 65987/1995 and are not described here in detail. With the high power factor AD/DC converter being applied to the X-ray generator, however, it is allowed to minimize the currents flowing into the slip rings 111a, 111b, 111c. That is, when there is used a three-phase full-wave rectifier circuit of the full-bridge constitution employing the conventional diodes or thyristors, the ratio of the effective power which the rectifier circuit receives from the AC power source to the apparent power is about 0.4 to about 0.6, i.e., the power factor is about 0.4 to 0.6. In the booster type high power factor AC/DC converter 4 used in this invention, on the other hand, the inductors 31a to 31c are connected between the AC power source output from the slip rings 111a, 111b, 111c and the converter 4, self-extinguishing switching elements are connected, e.g., insulated gate bipolar transistors (hereinafter abbreviated as IGBTs) are connected among the inductors, positive side and negative side of DC output of the converter 4 thereby to constitute a full-bridge three-phase full-wave rectifier circuit, and diodes are connected in reverse parallel with these self-extinguishing switching elements thereby to constitute an AC/DC converter 4. The current input to the converter 4 is detected to bring the phases into agreement between the input current and the input voltage of the converter, and the switching elements are controlled by pulse width modulation (hereinafter abbreviated as PWM) by the converter control circuit 11 so that the DC output voltage of the converter 4 will assume a predetermined voltage.

In the case of the booster type high power factor AC/DC converter capable of receiving the electric power maintaining a power factor of 1, the input current received by the converter 4 from the AC power source 1 may be about 1/2.5 to about 1/1.67 as compared to the full-wave rectifier circuit constituted by the conventional diodes or thyristors, and the input current becomes a sine wave. Therefore, only a small current flows into the slip rings and brushes, and a decreased amount of heat generates on the contact surfaces due to power loss. Besides, the current flowing into the slip rings have a frequency of 50 Hz or 60 Hz, which is very lower than the customarily used frequency of 20 kHz, contributing to decreasing the losses due to eddy current in the slip rings. As a result, the power loss greatly decreases in the power transfer device which comprises slip rings and brushes, and the X-ray generator having a high degree of reliability is constituted. Besides, the capacity of the AC power source needs be 60 to 70% that of the customarily needed capacity. In the booster type high power factor AC/DC converter 4 shown in Fig. 1, further, the self-extinguishing switching elements are PWM-controlled to store the electromagnetic energy in the inductors 31a to 31c. The electromagnetic energy is released to the smoothing capacitors 32 and 33, so that the smoothing capacitors are charged with a voltage greater than the peak voltage of the AC power source 1.

Namely, the booster type high power factor AC/DC converter 4 has a function for boosting the DC output voltage Vdc to be higher than the peak value of the AC input voltage and, hence, operates, on a high voltage, the soft switching inverter 5 connected to the output side of the booster type high power factor AC/DC converter 4, making it possible to effectively lower the floating capacitance of the secondary winding of the high-voltage transformer 8 as viewed from the primary side. Therefore, the current of the soft switching inverter 5 and the primary winding current of the high-voltage transformer 8 are decreased correspondingly, making it possible to greatly decrease the losses in the circuits. It has been known that the floating capacitance Cp of the secondary winding as viewed from the side of the primary winding of the high-voltage transformer 8 varies in proportion to the square power of the ratio of the number of turns as is disclosed in the literature (Hiroshi Takano et al., "Transformer Resonant Type High-Power DC-DC Converter for Medical use X-ray High-Voltage Generator ", Paper of the Institute of Electrical Engineers of Japan, Publication of Industry Applications Society, Vol. 117-D, No. 2, pp. 133-141, February, 1997),

$$Cp = 8\pi\varepsilon_e\varepsilon_0 r_2 h_2 n^2 / 3d(m_{Layer} - 1)m_{2nd}^2 m_{Leg} \qquad --- (1)$$

where Cp is a stray capacitance (F) of the secondary winding reckoned as that of the primary side, $\varepsilon_0$ is a dielectric constant (F/m) in vacuum, $\varepsilon_e$ is a relative dielectric constant of an oil immersion paper, $r_2$ is an average radius (m) of the secondary winding, $h_2$ is a height (m) of the primary and secondary windings, n is a ratio of the numbers of turns of the high-voltage transformer, d is an interlayer distance (m) of the secondary winding, $m_{Layer}$ is a number of the layers of the secondary winding, $m_{2nd}$ is a number for dividing the secondary winding per a leg, and $m_{Leg}$ is a number of legs.

When it is attempted to obtain a high voltage of 140 kV for the X-ray CT apparatus from an AC power source of 200 V, the input voltage to the inverter becomes about 360 V by taking into consideration a drop in the AC voltage of when the electric power is received by the X-ray generator. For this purpose, the ratio of the numbers of turns of the high-voltage transformer must be about 490.

In this case, for example, the stray capacitance Cp of the secondary winding reckoned to be that of the primary side is about 2.5 $\mu$F as found from the formula (1). In this case, the current flowing into the primary winding becomes as great as 100 to 200 A even when only a small tube current flows into the X-ray tube. Therefore, a reactive current flowing into the stray capacitance of the secondary winding is superposed on the effective power at all times even when the tube current is great.

The reactive current generates heat due to losses in the inverter and in the high-voltage transformer. This makes it difficult to flow a sufficient amount of tube current necessary for the X-ray generator for the X-ray CT apparatus for effecting the scanning in a short period of time , and requires the provision of cooling fins and cooling fans for emitting the generated heat, causing the apparatus to become bulky.

According to the embodiment of the invention shown in Fig. 1, on the other hand, the booster type high power factor AC/DC converter 4 is provided on the DC input side of the soft switching inverter 5 making it possible to elevate the DC voltage up to, for example, about 600 V to about 800 V. Even when the high-voltage transformer 8 has a small ratio of the numbers of turns, therefore, a sufficiently high output voltage can be obtained even with n = 180 to 200.

In this case, the current of the primary winding of the high-voltage transformer 8 and the current flowing into the soft switching inverter 5 are decreased down to about 1/5 to 1/4 as compared to those of the prior art having a ratio of the numbers of turns of 490, and are greatly decreased when the primary winding of the high-voltage transformer 8 has a small copper loss and the soft switching inverter 5 has a small continuity loss and, particularly, a small tube current. As described above, use of the converter having the boosting function is very effective in decreasing the loss of the X-ray generator in contrast with using the conventional diode or thyristor type converter without boosting function. The booster type high power factor AC/DC converter 4 can be constructed in several types for single-phase AC power source and for three-phase AC power source. The requirements for this embodiment are that it has a boosting function and a high power factor, and there is no limitation on the circuit system and on the control system.

<Soft Switching Inverter>

Next, described below is the soft switching inverter 5. The conventional inverter effects the switching in a state where a voltage is applied to the switching element of the inverter, and produces a large switching loss. The inverter used in the embodiment shown in Fig. 1 is a soft switching inverter capable of decreasing the switching loss down to almost zero.

The soft switching inverter is the one in which the losses due to the switching operation of the switching elements constituting the inverter by applying inductors and capacitors, can be decreased down to nearly zero. A variety kinds of soft switching inverters have been proposed. However, this invention solves a problem possessed by a soft switching technology disclosed in the literature (R.W. De Doncker et al.: "The Auxiliary Resonant Commutated Pole Converter", IEEE-IAS, 1990, pp. 1228-1235), and applies this technology to the resonance inverter type X-ray high-voltage generator which uses the phase shift PWM (pulse width modulation) control disclosed in Japanese Patent Laid-Open No. 190556/1988 thereby to constitute the X-ray generator for the X-ray CT apparatus of the invention shown in Fig. 1.

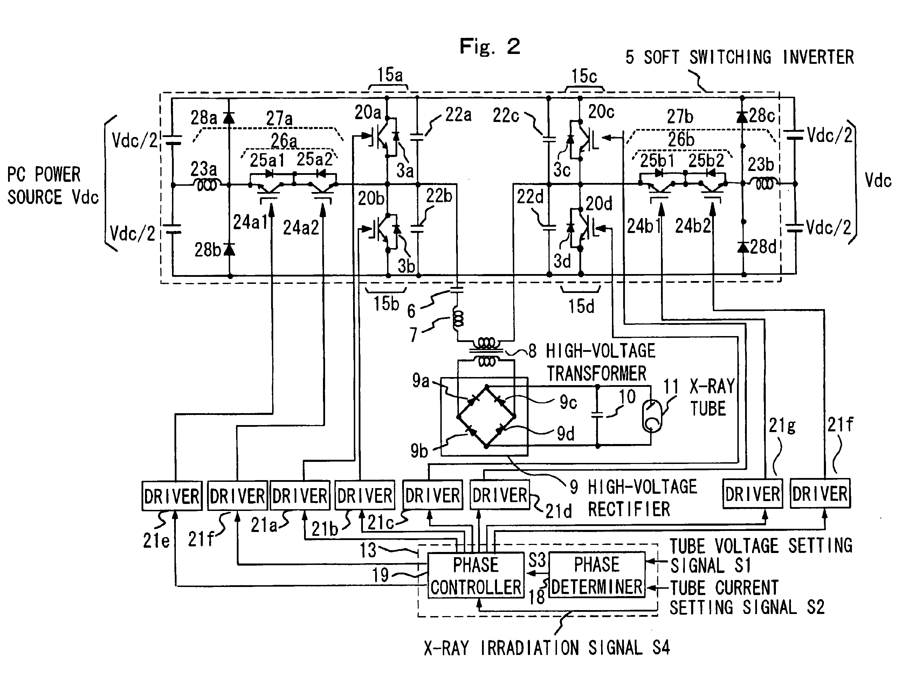

Fig. 2 illustrates in detail the circuit of from the soft switching inverter 5 through up to the X-ray tube 11 of Fig. 1. Here, however, the operation of the resonance inverter type X-ray high-voltage generator using the phase shift PWM control has been disclosed in detail in the above Japanese Patent Laid-Open No. 190556/1988, and is not described. In Fig. 2, the DC power source voltage Vdc is a voltage across the terminals of the capacitors 32 and 33 for smoothing the output voltage of the booster type high power factor AC/DC converter 4 of Fig. 1, and the DC power source Vdc/2 is a voltage across the capacitors 32 and 33. The DC power source Vdc is divided into two DC power source voltages Vdc/2 having a neutral point. The divided voltages are used as the DC power source voltage for the soft switching inverter 5. The soft switching inverter 5 is constituted as described below. Namely, the soft switching inverter 5 has a first series connection body comprising IGBT 20a which is a first switch connected to the positive pole of the DC power source Vdc and IGBT 20b which is a second switch connected to the negative pole thereof, and a second series connection body comprising IGBT 20c which is a third switch connected to the positive pole thereof and IGBT 20d which is a fourth switch connected to the negative pole thereof, wherein first to fourth diodes 3a to 3d are connected in reverse parallel with these IGBTs 20a to 20d. A first arm 15a is constituted by the first IGBT 20a and the first diode 3a, a second arm 15b is constituted by the second IGBT 20b and the second diode 3b, a third arm 15c is constituted by the third IGBT 20c and the third diode 3c, and a fourth arm 15d is constituted by the fourth IGBT 20d and the fourth diode 3d. Capacitors 22a to 22d used as loss-less Snauba circuits are connected in parallel with the first to fourth IGBTs 20a to 20d, a first auxiliary circuit 27a is connected between the neutral point (potential of Vdc/2) of the DC power source Vdc and a point where the first and second IGBTs 20a and 20b are connected together, and a second auxiliary circuit 27b is connected between the neutral point of the DC power source Vdc and a point where the third and fourth IGBTs 20c and 20d are connected together.

In the first auxiliary circuit 27a, an end of the inductor 23a is connected to the neutral point of the DC power source Vdc. To the other end of the inductor 23a is connected in series a bidirectional switch 26a comprising two sets of IGBTs 24a1, 24a2 as auxiliary switches and diodes 25a1, 25a2 connected in reverse parallel therewith. The other end of the bidirectional switch 26a is connected to the point where the first and second IGBTs 20a and 20b are connected together. The second auxiliary circuit 27b, too, is constituted in the same manner as the first auxiliary circuit 27a. The output side of the inverter 5 through up to the X-ray tube 11 are the same as those of Fig. 1, and are not described again.

Here, however, the high-voltage rectifier 9 is constituted by four diodes 9a to 9d. A phase determining circuit 18 and a phase control circuit 19 are contained in the inverter controller 13 of Fig. 1, and constitute means for forming signals for controlling the timings for turning the first to fourth IGBTs 20a to 20d on and off in response to a tube voltage set signal S1 for the X-ray tube 11 and a tube current set signal S2 for the X-ray tube 11. The phase determining circuit 18 determines the operation phases of the switches IGBTs 20a to 20d in response to the tube voltage set signal S1 and the tube current set signal S2. The phase control circuit 19 produces, in response to an output signal S3 from the phase determining circuit 18, signals for controlling the phases with which the IGBTs 20a to 20d operate and signals for controlling the timings for turning the auxiliary switches IGBTs 24a1, 24a2, 24b1, 24b2 on and off at a moment when the X-ray irradiation signal S4 is input from a controller that is not shown. Reference numerals 21a to 21h denote drive circuits for driving the switches IGBTs 20a to 20d and auxiliary switches IGBTs 24a1, 24a2, 24b1, 24b2 in response to control signals output from the phase control circuit 19.

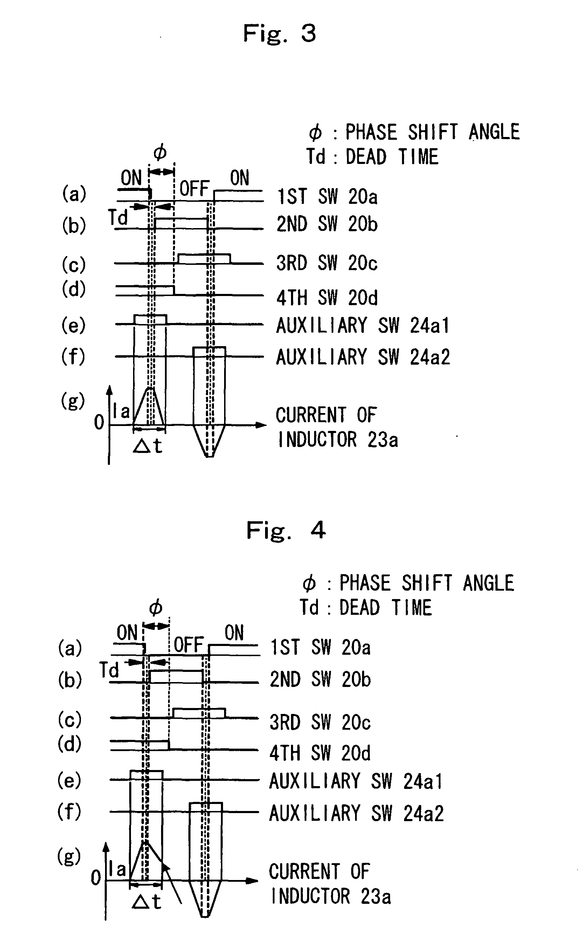

Here, in this invention, the anode of a first protection diode 28a and the cathode of a second protection diode 28b are connected together to a point where the inductor 23a and the bidirectional switch 26a are connected together in the first auxiliary circuit 27a, the cathode of the first protection diode 28a being connected to the positive pole of the DC power source Vdc and the anode of the second protection diode 28b being connected to the negative pole of the DC power source Vdc. Further, the anode of a third protection diode 28c and the cathode of a forth protection diode 28d are connected together to a point where the inductor 23b and the bidirectional switch 26b are connected together in the second auxiliary circuit 27b, the cathode of the third protection diode 28c being connected to the positive pole of the DC power source Vdc and the anode of the fourth protection diode 28d being connected to the negative pole of the DC power source Vdc. Next, described below is the operation of the soft switching inverter 5 constituted as described above. The normal (basic) operation of the auxiliary switches IGBTs 24a1, 24a2, 24b1, 24b2 performing zero-voltage switching operation in the circuit system of the invention, is the same as the operation of the circuit taught in the above literature (R.W. De Doncker et al.: "The Auxiliary Resonant Comutated Pole Converter", IEEE-IAS, 1990, pp. 1228-1235) , and the protection diodes 28a to 28d do not usually affect the operation. Here, the auxiliary switches IGBTs 24a1, 24a2, 24b1, 24b2 are controlled depending upon the operation conditions so as to supply a minimum of auxiliary current for realizing the soft switching to the switches IGBTs 20a to 20d. Waveforms at various portions in the operation are shown in Fig. 3.

The timings for turning the auxiliary switches IGBTs 24a1, 24a2, 24b1, 24b2 on and off provide a predetermined period $\Delta t$ (minimum period necessary for the soft switching) before and after a reference timing for turning the switches IGBTs 20a to 20d on and off as determined by the phase determining circuit 18. The auxiliary switches IGBTs 24a1, 24a2, 24b1, 24b2 are turned on only during the period $\Delta t$ to realize the soft switching.

Here, considered below is the operation of the auxiliary circuit 27a of the left side presuming a case where the potential at the neutral point is not correctly Vdc/2 due to some cause, such as due to a change in the DC power source Vdc, and the absolute value of the inclination (change in the time) differs depending upon when the auxiliary current is increasing and is decreasing. According to the circuit operation of Fig. 2, the auxiliary switches 24a1, 24a2 are not capable of realizing zero-current switching but cuts off the current of a given value as shown in Fig. 3, and the auxiliary current assumes a very sharp inclination as shown in Fig. 4. Then, a very high voltage generates across the terminals of the inductor 23a. If the inductance of the inductor 23a is 10 $\mu$H, the breaking current value is 50 A and the turn-off time of the auxiliary switches is 0.5 $\mu$s, then, a voltage Va that generates across the terminals of the inductor 23a becomes,

$$Va = La \times dIa/dt$$

$$= 10 \times 10 - 6 \, [H] \times 50 \, \{A\}/0.5 \times 10 - 6[s]$$

$$= 1000 \, [V]$$

In this case, if it is regarded that the potential remains relatively stable at the neutral point of the DC power source Vdc which is one connection point of the inductor 23a, then, the potential becomes very high (or very low) at another connection point, i.e., at the point where the inductor 23a and the bidirectional switch 26a are connected together. In the conventional circuit without the protection diodes 28a to 28d, therefore, a high voltage generates across the terminals of the bidirectional switches 26a, 26b as described above, and the auxiliary switches 24a1, 24a2, 24b1, 24b2 or the diodes 25a1, 25a2, 25b1, 25b2 are destroyed when their breakdown voltages are exceeded. Besides, when it is forced to shut off the first to fourth switches IGBTs 20a to 20d and the auxiliary switches IGBTs 24a1, 24a2, 24b1, 24b2 like when the X-ray irradiation is stopped or when the apparatus is placed in an abnormal condition, the current, in the worst case, is interrupted when the auxiliary current assumes a peak value. In such a case, a higher voltage generates on the inductors 23a, 23b, whereby the auxiliary switches 24a1, 24a2, 24b1, 24b2 and the diodes are destroyed, and the first to fourth switches IGBT's 20a to 20d and the peripheral electric parts may be broken being affected thereby.

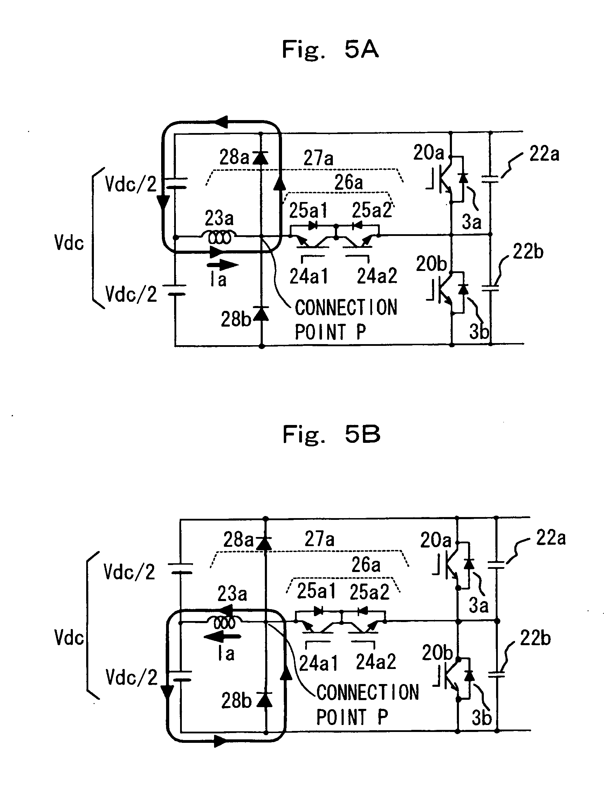

According to the embodiment of Fig. 2 of the invention, however, a high voltage is suppressed from being applied to the auxiliary switches IGBTs 24a1, 24a2, 24b1, 24b2 or to the diodes 25a1, 25a2, 25b1, 25b2 owing to the effect of the protection diodes 28a to 28d even when the current is shut off without decreasing the auxiliary current to zero, and the reliability of the apparatus can be enhanced. This will now be described with reference to Fig. 5. Described below is a case where a current is flowing through the auxiliary inductor 23a toward the right as shown, and is to be shut off in the auxiliary circuit 27a of the left side. If it is presumed that a current (i.e., auxiliary current) Ia flowing through the inductor 23a is shut off, a high voltage Va is generated across the inductor 23a and the potential at the neutral point of the DC power source Vdc remains nearly fixed, then, a potential Ep at a point (hereinafter referred to as connection point P) where the diodes 28a and 28b are connected together becomes nearly,

$$Ep = (Vdc/2) + Va$$

Here, if Va is sufficiently great and Ep > Vdc, a forward bias is applied to the protection diode 28a to render it conductive, and a current flowing therethrough is regenerated by the DC power source Vdc as shown in Fig. 5(a). Therefore, a voltage is applied to both terminals of the bidirectional switch 27a for only a short period of time in which the voltage across the terminals of the inductor 23a rises, i.e., for only a period of time in which Ep ≤ Vdc holds from when the auxiliary current is shut off. However, the voltage applied to both terminals of the bidirectional switch 27a is nearly equal to the DC power source voltage Vdc at the greatest. This also holds even when the auxiliary current is flowing in the reverse direction (toward the left), and the protection diode 28b is rendered conductive when Ep which is the potential at the connection point P becomes

$$Ep = Vdc/2 - Va < 0$$

and it is allowed to suppress an overvoltage from being applied to the bidirectional switch 27a as shown in Fig. 5(b).

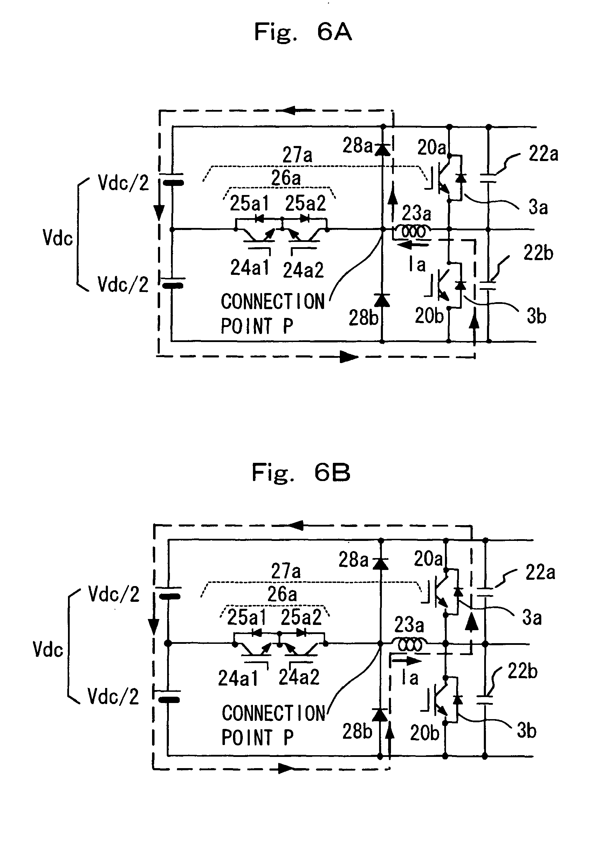

Even when the positions of the inductor in the auxiliary circuit and of the bidirectional switch are exchanged, the electric current flows through a passage shown in Fig. 6 when the auxiliary current is shut off, and the auxiliary switches and the like are prevented from being destroyed to accomplish the object of the invention.

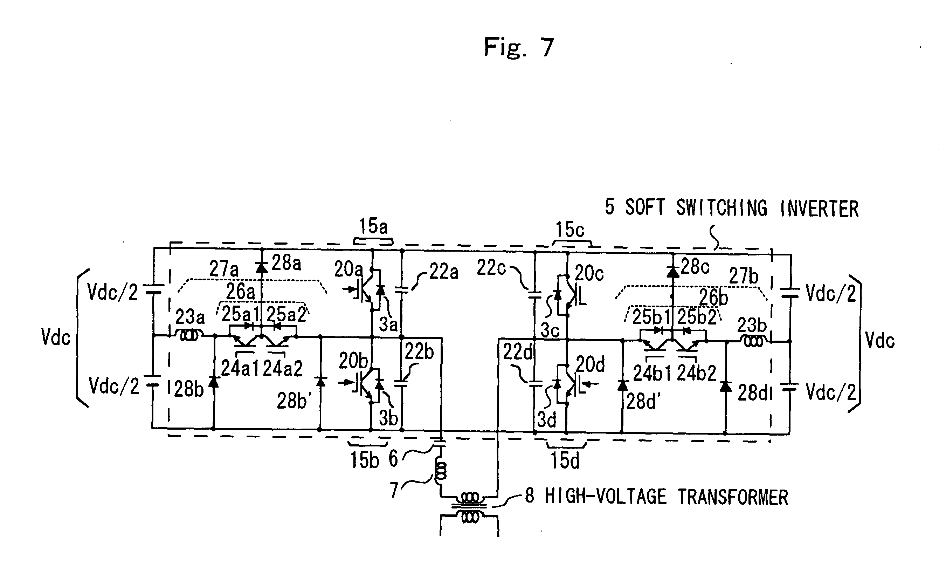

Fig. 7 illustrates a modified example of the circuit of Fig. 2 and in which the diodes 28a, 28c for free-wheeling the current flowing into the auxiliary inductor are rearranged, and the diodes 28b', 28d' are newly provided. The circuit connected to the output of the inverter 5 is the same as that of Fig. 2 and is not shown here. Described below are the auxiliary circuit 27a of the left side and the current free-wheeling circuit in the circuit of Fig. 7. Namely, the diode 28a in the circuit of Fig. 2 is connected to the positive electrode of the DC power source Vdc and to the connection point of the diodes 25a1, 25a2 of the bidirectional switch 26a, and a new diode 28b' is connected between the negative pole of the DC power source Vdc and a connection point of the bidirectional switch 26a connected to a point where the first arm 15a and the second arm 15b are connected together. Even with the thus constituted circuit, the normal operation and the operation for free-wheeling the current that is flowing through the auxiliary inductor are the same as the operations of Fig. 2. In addition to this in the embodiment of Fig. 7, it is made possible to free-wheel even a current flowing through an inductance (hereinafter simply referred to as wiring inductance) contained in a wiring between the point where the first arm 15a and the second arm 15b are connected together with the bidirectional switch 26a.

(1) Path for free-wheeling a current that is flowing through the auxiliary inductor.

1) When flowing toward the right in Fig. 7.
Auxiliary inductor 23a → diode 25a1 → diode 28a → DC power source Vdc/2 → auxiliary inductor 23a.
2) When flowing toward the left in Fig. 7.

Auxiliary inductor 23a → DC power source Vdc/2 → diode 28b → auxiliary inductor 23a.
(2) Path for free-wheeling a current that is flowing through the wiring inductance.

1) When flowing toward the right in Fig. 7.
Wiring inductance → diode 3a → DC power source Vdc/2

→ diode 28b' → wiring inductance.

2) When flowing toward the left in Fig. 7.

Wiring inductance → diode 25a2 → diode 28a → DC power source Vdc/2 → diode 3b → wiring inductance.

The inductance of the wiring between the neutral point of the DC power source Vdc and the bidirectional switch was not particularly referred to. This, however, may be considered by being included in the auxiliary inductor 23a. In shutting off the auxiliary current, further, the current flows through paths described in (1) and (2) above. Therefore, the positions of the inductor in the auxiliary circuit and the bidirectional switch may be exchanged.

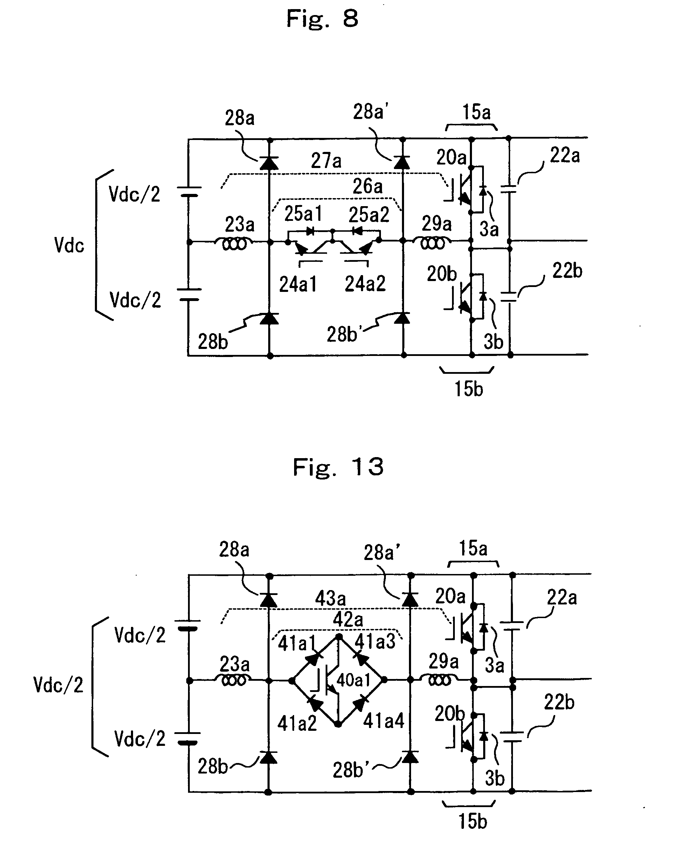

The auxiliary circuit 27b and the current free-wheeling circuit of the right side are the same as those of the left side, and are not described here. Fig. 8 illustrates a modified example of the circuit of Fig. 2. As described above, the auxiliary circuit operates in the same manner on both the right side and the left side. Here, therefore, the auxiliary circuit of the right side only is described. The circuit of Fig. 8 is the one in which free-wheeling diodes 28a' and 28b' are provided between the bidirectional switch 26a and the point where the first arm 15a and the second arm 15b in Fig. 2 are connected together, thereby to form a path for free-wheeling a current flowing through an inductance 29a of the wiring existing between the bidirectional switch 26a and the point where the first arm 15a and the second arm 15b are connected together. This constitution makes it possible to free-wheel even a current flowing into the inductance existing in the wiring of the circuit inclusive of inductance 29a of the wiring through which the auxiliary current free-wheels.

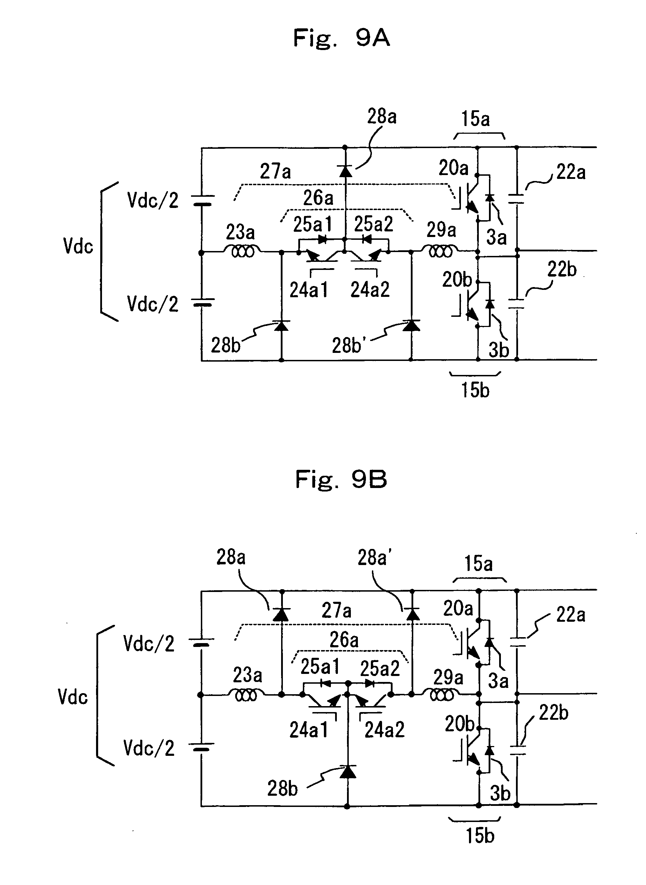

In this circuit, when the inductance existing in the wiring of the circuit through which the auxiliary current free-wheels does not impose a problem, the auxiliary inductor 23a may be connected between the bidirectional switch 26a and the point where the first arm 15a and the second arm 15b are connected together, to omit free-wheeling diodes 28a, 28b. In the bidirectional switches of Figs. 2 and 8, further, the auxiliary circuit operates in the same manner as described above even when the bidirectional switch is constituted by connecting the IGBTs 24a1, 24a2 and the diodes 25a1, 25a2 with their polarities being reversed. Fig. 9 illustrates a modified example of Fig. 7 and wherein Fig. 9(a) illustrates a circuit constituted by taking into consideration the inductance 29a of the wiring existing between the bidirectional switch 26a and the point where the first arm 15a and the second arm 15b are connected together in the circuit of Fig. 7. Upon being constituted as described above, the current flowing through the inductance 29a of the wiring can be free-wheeled. Fig. 9(b) illustrates a modified example of the circuit of Fig. 9(a) and in which the bidirectional switch 26a is constituted by connecting the IGBTs 24a1, 24a2 and the diodes 25a1, 25a2 of the bidirectional switch In Fig. 2 with their polarities being reversed, the free-wheeling diode 28b is connected between the negative pole of the DC power source and the point where the IGBTs 24a1 and 24a2 of the bidirectional switch 26a are connected together, and the free-wheeling diodes 28a and 28a' are connected between the positive polarity of the DC power source and the two ends of the bidirectional switch 26a. Even when thus constituted, the operation is the same as that of the circuit of Fig. 9 (a) When the inductance of the wiring of the free-wheeling circuit does not impose a problem, further, the diode 28b' may be omitted in Fig. 9(a), and the diode 28a' may be omitted in Fig. 9(b). Further, the same effects as those described above can be obtained even when the auxiliary inductor 23a is connected between the bidirectional switch 26a and the point where the first arm 15a and the second arm 15b are connected together in Figs. 9(a) and 9(b) and in other modified examples.

According to the embodiment based upon Fig. 2 as described above, provision is made of means for free-wheeling the current that flows into the auxiliary inductor at the time when the auxiliary switch is shut off, i.e., provision is made of diodes 28a, 28a', 28b, 28b', 28c, 28c', 28d, 28d' in order to suppress the generation of an overvoltage due to shut off by the auxiliary switches and, hence, to prevent the auxiliary switches IGBTs 24a1, 24a2, 24b1, 24b2 or the diodes 25a1, 25a2, 25b1, 25b2 from being destroyed.

The DC/DC converter using the soft switching inverter is employed for the X-ray high voltage generator which bears the load over a very wide range (varying as wide as 104 times in terms of the load resistance) so as to efficiently operate under every load condition while suppressing the switching noise at all times and featuring a small switching loss, which are great advantages.

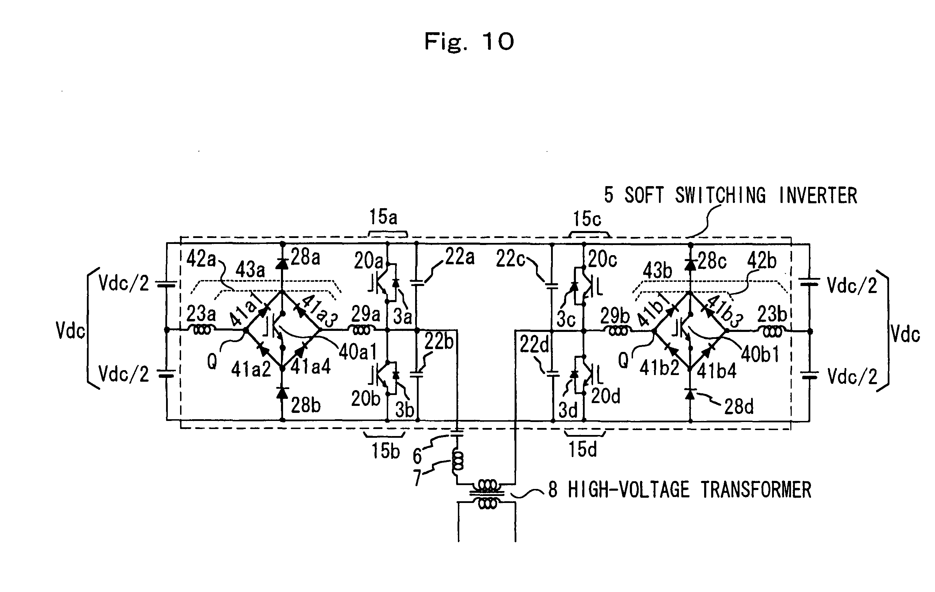

Fig. 10 illustrates another embodiment constituting an auxiliary circuit by using a biirectional switch different from the bidirectional switches in the auxiliary circuits of Figs. 2, 7 to 9. This embodiment is the same as the above embodiments except the auxiliary circuit. Therefore, different portions only are described here.

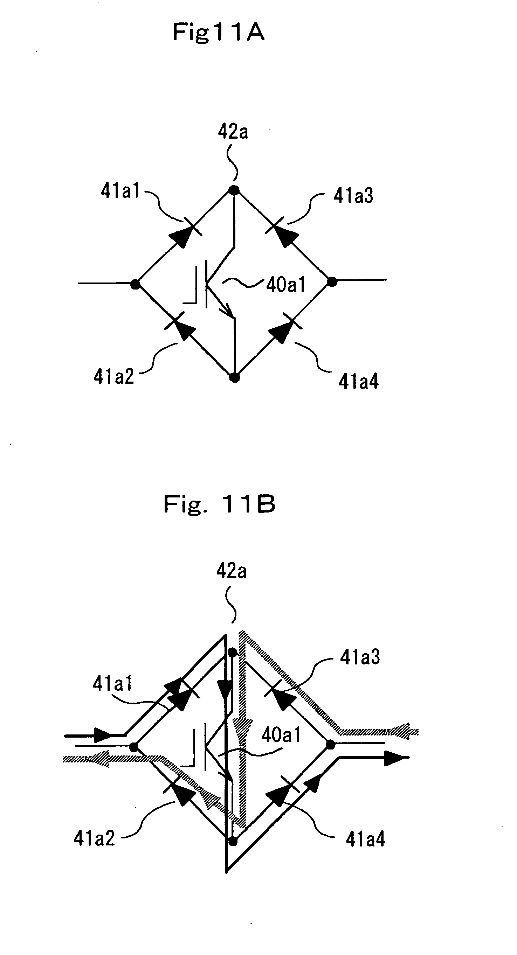

In Fig. 10, bidirectional switches shown in Fig. 11 are used as the bidirectional switches in the auxiliary circuit, diodes 28a and 28c are so connected as to become conductive from the positive poles of the bidirectional switches 42a, 42b toward the positive pole of the DC power source Vdc, and diodes 28b and 28d are so connected as to become conductive from the negative pole of the DC power source Vdc toward the negative poles of the bidirectional switches.

First, the bidirectional switches of Fig. 11 will be described prior to describing the circuit of Fig. 10.

As shown in Fig. 11(a), the bidiretional switch 42a is constituted by connecting a self-extinguishing switching element 40a1 between the positive pole and the negative pole of a full-wave rectifier circuit comprising four diodes 41a1 to 41a4 to flow a current from the positive pole to the negative pole. The thus constituted bidirectional switch 42a forms a current path as shown in Fig. 11(b), and works as a bidirectional switch. The bidirectional switch 42b, too, is constituted in the same manner. By providing these bidirectional switches, only one switching element is used in the bidirectional switch, and the circuit can be simplified. In Fig. 10, the first auxiliary circuit 43a is such that one end of the auxiliary inductor 23a is connected to the neutral point of the DC power source Vdc, and to the other end of the inductor 23a is connected a connection point of diodes 41a1 and 41a2 of the bidirectional switch 42a which is a combination of the auxiliary switch IGBT 40a1 and a full bridge of diodes 41a1, 41a2, 41a3, 41a4, and another end (connection point of diodes 41a3 and 41a4) of the bidirectional switch 42a is connected to a connection point of the first arm 15a and the second arm 15b. The second auxiliary circuit 43b, too, is constituted in the same manner as the first auxiliary circuit, and in which one end of the auxiliary inductor 23b is connected to the neutral point of the DC power source Vdc, and to the other end of the inductor 23b is connected a connection point of diodes 41b1 and 41b2 of the bidirectional switch 42b which is a combination of the auxiliary switch IGBT 40b1 and a full bridge of diodes 41b1, 41b2, 41b3, 41b4, and another end (connection point of diodes 41b3 and 41b4) of the bidirectional switch 42b is connected to a connection point of the third arm 15c and the fourth arm 15d. Reference numeral 29a denotes an inductance of the wiring existing between the bidirectional switch 26a and a point where the first arm 15a and the second arm 15b are connected together, and reference numeral 29b denotes an inductance of the wiring existing between the bidirectional switch 26b and a point where the third arm 15c and the fourth arm 15d are connected together.

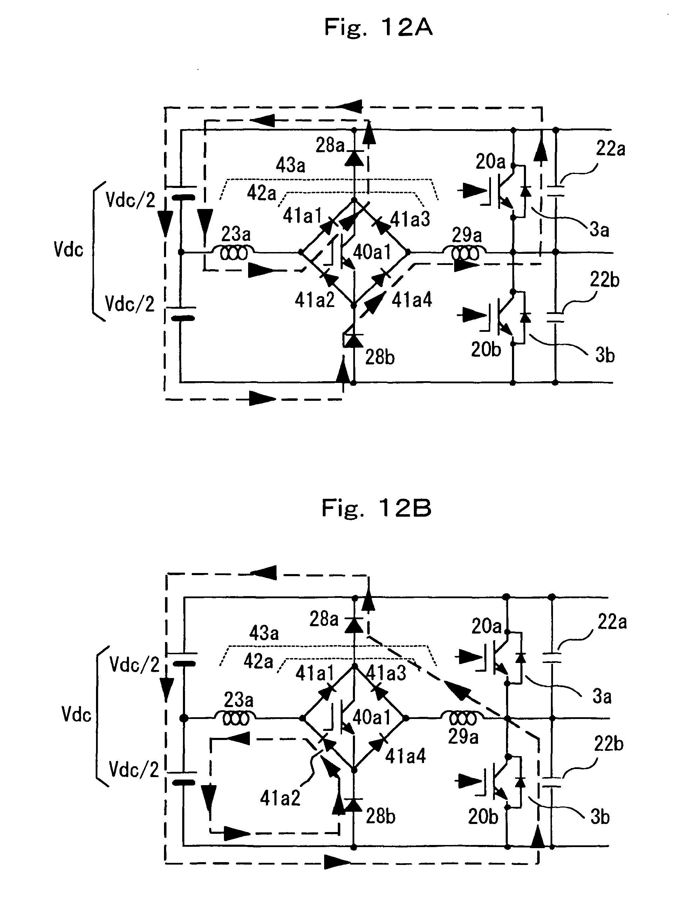

Described below is the operation of the soft switching inverter constituted by using the above auxiliary circuit. The normal operation in which the auxiliary switches IGBTs 40a1, 40b1 in the circuit system of Fig. 10 performs the zero-voltage switching opertion, is the same as the circuit operation shown in Figs. 2, 7 to 9, and is not affected by the protection diodes 28a to 28d which free-wheel the currents flowing into the inductors 23a, 23b in the auxiliary circuit and into the inductances 29a, 29b of the wiring. The operation for suppressing the overvoltage that generates in the thus constituted auxiliary circuit will now be described with reference to Fig. 12.

First, considered below is a case where, in the auxiliary circuit 43a of the left side, the current is shut off, the current being the one flowing toward the right through the auxiliary inductor 23a and the inductor 29a due to the inductance in the wiring between the bidirectional switch 42a and the first series connection body as shown in Fig. 12(a). In this case, the protection diode 28a and the diode 41a1 in the bidirectional switch 42a are biased in the forward direction and are rendered conductive. Therefore, a first free-wheeling circuit is established passing through the inductor 23a → diode 41a1 → diode 28a → DC power source Vdc/2, and the current flowing through the inductor 23a free-wheels.

At the same time, the diodes 28b, 41a4 and 3a are biased in the forward direction and are rendered conductive. Therefore, a second free-wheeling circuit is established passing through the inductor 29a → diode 3a → DC power source vdc/2 → DC power source vdc/2 → diode 28b → diode 41a4, and the current flowing through the inductor 29a free-wheels.

Similarly, when a current is shut off, the current flowing toward the left through the auxiliary inductor 23a and the inductor 29a due to the inductance in the wiring between the bidirectional switch 42a and the first series connection body as shown in Fig. 12 (b), the protection diode 28b and the diode 41a2 in the bidirectional switch 42a are biased in the forward direction and are rendered conductive. Therefore, a third free-wheeling circuit is established passing through the inductor 23a → DC power source Vdc/2 → diode 28b → diode 41a2, and the current flowing through the inductor 23a free-wheels. At the same time, the diodes 28b, 3b and 41a3 are biased in the forward direction and are rendered conductive. Therefore, a fourth free-wheeling circuit is established passing through the inductor 29a → diode 41a3 → diode 28a → DC power source Vdc/2 → DC power source Vdc/2 → diode 3b, and the current flowing through the inductor 29a free-wheels.

As described above, there are formed the first to fourth free-wheeling circuits, and the currents flowing through the inductors of the auxiliary circuit free-wheel through the above circuits. Accordingly, no high voltage generates in the auxiliary circuit, and the parts in the auxiliary circuit are prevented from being broken.

Fig. 13 illustrates a modified example of Fig. 10. The auxiliary circuit operates in the same manner on either the right side or the left side. Therefore, the auxiliary circuit of the right side only is illustrated. In the modified example of Fig. 13, the free-wheeling diode is provided at an AC end of the bidirectional switch 42a. Namely, free-wheeling diodes 28a and 28b are provided between the point where the auxiliary inductor 23a and the bidirectional switch 42a are connected together and the positive pole and negative pole of the DC power source Vdc, and free-wheeling diodes 28a' and 28b' are provided between the point where the first arm 15a, second arm 15b and another AC end of the bidirectional switch 42a are connected together and the positive pole and negative pole of the DC power source Vdc. This constitution, too, makes it possible to free-wheel the current flowing into the inductance of the wiring between the point where the first arm 15a and the second arm 15b are connected together and the bidirectional switch 42a like that of Fig. 10.

When the wiring inductance can be omitted, the free-wheeling diodes 28a' and 28b' canbeomitted, too. Besides, the auxiliary inductor 23a can be connected to the point where the first arm 15a and the second arm 15b are connected together and to the AC end of the bidirectional switch 42a, while omitting the free-wheeling diodes 28a and 28b. According to the circuit based on Fig. 10 as described above, means is provided, i.e., diodes 28a, 28a', 28b, 28b', 28c, 28c', 28d, 28d' are provided for free-wheeling the current flowing through the auxiliary inductor at the time of shutting off the auxiliary switches, in order to suppress the overvoltage that generates when the auxiliary switches are shut off and to prevent the auxiliary switches IGBTs 40a1, 40b1 or the diodes 41a1 to 41a4, 41b1 to 41b4 from being broken.

The DC/DC converter using the soft switching inverter is employed for the X-ray high voltage generator which bears the load over a very wide range (varying as wide as 104 times in terms of the load resistance) so as to efficiently operate under every load condition while suppressing the switching noise at all times and featuring a small switching loss, which are great advantages. In the above embodiment, the inductor and the bidirectional switch are connected in series as an auxiliary circuit for realizing the soft switching, and are provided for both the first series connection body and the second series connection body. Depending upon the current waveforms of the arms 15a to 15d, however, either one of them may be used as an auxiliary circuit of the inductor 23a or 23b only, or either one of the auxiliary circuit may be removed provided the soft switching can be accomplished. In the above embodiment, further, the IGBTs were used for the first to fourth switches 20a to 20d and for the auxiliary switches 24a1, 24a2, 24b1, 24b2, 40a1, 40b1. Here, however, it is also allowable to use other switching elements such as MOSFETs, bipolar transistors and thyristors to meet the specifications of the apparatus to which they are to be applied. In the above embodiment, further, the resonant inverter type X-ray high-voltage generator based on the phase shift PWM control taught in Japanese Patent Laid-Open No. 190556/1988 was described as means for controlling the timings for turning the first to fourth switches on and off. However, the invention is in no way limited thereto only, but can be applied to a method of controlling the operation frequencies of the first to fourth switches depending upon the signals for setting the voltage applied to the load and for setting the current supplied to the load, or to a method of controlling both the frequencies and the phases, and to the non-resonance type method which requires neither the capacitor 6 for resonance nor the inductor 7. Namely, when the booster type high power factor AD/DC converter is operated on a high voltage, the soft switching inverter of the invention works to decrease the switching loss that increases in the inverter portion due to the operation at high voltage. The soft switching inverter is used from this point of view but does not impose any limitation on the type of the circuit.

<Anode Rotating Circuit in the X-ray Tube>

In Fig. 1, a DC voltage boosted by the booster type high power factor AC/DC converter is connected to the anode rotating circuit 14 of the X-ray tube 11 to drive the anode of the X-ray tube. This is based on the use of a voltage which is boosted to a sufficient degree as a voltage of the booster type starter. This constitution does not require any particular DC high voltage source that was required so far, and the X-ray generator as a whole can be constructed in a small size. The constitution and operation of the anode rotating circuit 14 have been closely described in Japanese Patent Laid-Open No. 150193/2000, and are not described here in detail.

As described above, the invention:

(1) provides an X-ray high-voltage generator of a large output by improving the efficiency of the X-ray generator, to feed a large current to the X-ray tube to cope with an increase in the scanning speed and to conduct the spiral scan for extended periods of time with the large current;

(2) provides an X-ray CT apparatus which decreases the current flowing into the power transfer device comprising the slip rings and the brushes that feed the electric power from the commercial power source to the X-ray generator as a result of improving the efficiency of the X-ray generator, decreases the number of maintenance men required by the power transfer device owing to the employment of a commercial frequency of as low as 50 Hz or 60 Hz, and improves the reliability of the X-ray CT apparatus; and

(3) provides an X-ray CT apparatus of a high picture quality by realizing the X-ray high-voltage generator and the anode rotating circuit in the X-ray tube in small sizes and in reduced weights, so that they can be mounted on the scanner rotary plate, enabling the X-ray CT apparatus to be constituted in three units, i.e., a scanner, a table and a desk incorporating an image processing unit, requiring a small installation space, and being little affected by induced noise as a result of shortening the distance between the X-ray high voltage generator and the slip rings of the power transfer device.

**Claims**

1. An X-ray generator comprising:

a converter (4) for converting an AC voltage from an AC power source (1) into a DC voltage;
an inverter (5) for converting the DC voltage from the converter into an AC voltage;
a high-voltage transformer (8) for boosting the AC voltage from the inverter;
a rectifier (9) for rectifying the AC voltage boosted by the high-voltage transformer into a DC voltage; and
an X-ray tube (11) for radiating X-rays upon being supplied with a DC high voltage rectified through the rectifier;

wherein the converter (4) comprises a full-wave rectifier circuit including a self-extinguishing semiconductor switching element, inductors (31) connected between the AC input terminals of the full-wave rectifier circuit and the AC power source (1), and a converter controller (12) for controlling the self-extinguishing switching element so that the phase current and the phase voltage of the AC power source are brought into agreement with each other and that the output voltage of the full-wave rectifier circuit is brought into agreement with a target voltage; and

the inverter (5) comprises a semiconductor switching element (20) and zero-voltage switching means (23 - 27) for turning the semiconductor switching element on and off and setting the voltage of the semiconductor switching element to nearly zero at the time when it is turned on and off, current free-wheeling means (28) for free-wheeling the current flowing into the zero-voltage switching means (23 - 27) when the zero-voltage switching means (23 - 27) is shut off, and control means (13) for controlling the timing for turning the semiconductor switching element (20) of the inverter on and off in response to signals (S1, S2) for setting the voltage and current applied to the X-ray tube (11).

2. An X-ray generator according to claim 1, wherein the zero-voltage switching means comprises a bi-directional switch (24, 25, 26), and the current free-wheeling means (28) is connected to the converter side or the high-voltage transformer side of the bi-directional switch.

3. An X-ray generator according to claim 2, wherein the current free-wheeling means comprises two diodes (28) connected in series.

4. An X-ray generator according to claim 3, wherein one of the two diodes (28) is connected to the positive voltage side of the converter (4) and the other is connected to the negative voltage side of the converter.

5. An X-ray generator according to claim 3 or 4, wherein one (28a, 28c) of the two diodes (28) is connected to a connection point of the bi-directional switch (24, 25, 26).

6. An X-ray generator according to any of claims 2 to 5, wherein the inverter (25) comprises
a first series-connection body including a first switching element (20a) connected to a positive voltage pole and a second switching element (20b) connected to a negative voltage pole,
a second series-connection body connected in parallel with the first series-connection body and including a third switching element (20c) connected to the positive voltage pole, and a fourth switching element (20d) connected to the negative voltage pole, and
first to fourth diodes (3a ~ 3d) and capacitors (22a ~ 22d) connected in reverse parallel to the first to fourth switching elements.

7. An X-ray generator according to claim 6, wherein the current free-wheeling means comprises diodes (3, 28) connected in parallel with one of the first to fourth switching elements.

8. An X-ray generator according to claims 6 or 7, wherein the current free-wheeling means (28) is disposed between the first or second series-connection body and the converter side terminal of the bi-directional switch (24, 25, 26).

9. An X-ray generator according to any of claims 1 to 8,
wherein the inverter (5) comprises:

a first series connection body including a first switching element (20a) connected to the positive pole of the DC voltage from the converter (4) and a second switching element (20b) connected to the negative pole thereof;
a second series connection body connected in parallel with the first series connection body and including a third switching element (20c) connected to the positive pole and a fourth switching element (20d) connected to the negative pole;
first to fourth diodes (3a - 3d) and capacitors (22a - 22d) connected in reverse parallel with the first to fourth switching elements;
first auxiliary current feed means (23a - 27a) for feeding a current in the forward direction of the first and second diodes when the first and second switching elements are turned on and off; and
second auxiliary current feed means (23b - 27b) for feeding a current in the forward direction of the third and fourth diodes when the third and fourth switching elements are turned on and off;
and wherein the current free-wheeling means (28) free-wheels the current when the current flowing through the first and second auxiliary current feed means is shut off.

10. An X-ray generator according to claim 9, wherein the converter (4) provides a DC power source having a first DC power source and a second DC power source connected in series, with the point of connection thereof as a neutral point, the first auxiliary current feed means (23a - 27a) has a series connection member of a first inductor (23a) and a first bidirectional switch (24a - 26a) connected between the neutral point of the DC power source and the connection point of the first and second switching elements (20a, b), the second auxiliary current feed means (23b - 27b) has a series connection member of a second inductor (23b) and a second bidirectional switch (24b - 26b) connected between the neutral point of the DC power source and the connection point of the third and fourth switching elements (20c, d), and the current free-wheeling means (28) free-wheels the current flowing through the first and second auxiliary current feed means when the first and second bidirectional switches are rendered nonconductive from the conductive state.

11. An X-ray generator according to claim 10, wherein the current free-wheeling means (28) includes:

first current free-wheeling means in which a connection point of a series connection body of the anode of a first free-wheeling diode (28a) and of the cathode of a second free-wheeling diode (28b), is connected to a connection point of the first inductor (23a) and the first bidirectional switch (24a - 26a), the cathode of the first free-wheeling diode is connected to the positive pole of the first DC power source, and the anode of the second free-wheeling diode is connected to the negative pole of the second DC power source; and

second current free-wheeling means in which a connection point of a series connection body of the anode of the third free-wheeling diode (28c) and of the cathode of the fourth free-wheeling diode (28d), is connected to a connection point of the second inductor (23b) and the second bidirectional switch (24b - 26b), the cathode of the third free-wheeling diode is connected to the positive pole of the first DC power source, and the anode of the fourth free-wheeling diode is connected to the negative pole of the second DC power source.

12. An X-ray generator according to claim 10, wherein the current free-wheeling means (28) includes:

first current free-wheeling means in which a connection point of a series connection body of the anode of a first free-wheeling diode (28a) and the cathode of a second free-wheeling diode (28b), is connected to an end of the first bidirectional switch (24a - 26a), the cathode of the first free-wheeling diode is connected to the positive pole of the first DC power source, and the anode of the second free-wheeling diode is connected to the negative pole of the second DC power source;

second current free-wheeling means in which a connection point of a series connection body of the anode of a third free-wheeling diode (28a') and the cathode of a fourth free-wheeling diode (28b'), is connected to another end of the first bidirectional switch, the cathode of the third free-wheeling diode is connected to the positive pole of the first DC power source, and the anode of the fourth free-wheeling diode is connected to the negative pole of the second DC power source;

third current free-wheeling means in which a connection point of a series connection body of the anode of a fifth free-wheeling diode (28c) and the cathode of a sixth free-wheeling diode (28d), is connected to an end of the second bidirectional switch (24b - 26b), the cathode of the fifth free-wheeling diode is connected to the positive pole of the first DC power source, and the anode of the sixth free-wheeling diode is connected to the negative pole of the second DC power source; and

fourth current free-wheeling means in which a connection point of a series connection body of the anode of a seventh free-wheeling diode (28c') and the cathode of an eighth free-wheeling diode (28d'), is connected to another end of the second bidirectional switch, the cathode of the seventh free-wheeling diode is connected to the positive pole of the first DC power source, and the anode of the eighth free-wheeling diode is connected to the negative pole of the second DC power source.

13. An X-ray generator according to claim 10, wherein each bidirectional switch (24, 25, 26) is constituted by two connection bodies each comprising a semiconductor switching element (24) and a diode (25) connected in reverse parallel with the switching element (24), and so connected that the directions of conduction of the switching elements of the connection bodies are opposite to each other.

14. An X-ray generator according to claim 13, wherein the current free-wheeling means (28) comprises first current free-wheeling means including first to third free-wheeling diodes (28a, 28b, 28b'), and second current free-wheeling means including fourth to sixth free-wheeling diodes (28c, 28d, 28d'), wherein:

the first current free-wheeling means is such that the first free-wheeling diode is so connected that the connection point of the two connection bodies of the first bidirectional switch (24a - 26a) is rendered conductive to the positive pole of the first DC power source, the second free-wheeling diode is so connected that the negative pole of the second DC power source is rendered conductive to one end of the first bidirectional switch, and the third free-wheeling diode is so connected that the negative pole of the second DC power source is rendered conductive to another end of the first bidirectional switch; and

the second current free-wheeling means is such that the fourth free-wheeling diode is so connected that the connection point of the two connection bodies of the second bidirectional switch (24b - 26b) is rendered conductive to the positive pole of the first DC power source, the fifth free-wheeling diode is so connected that the negative pole of the second DC power source is rendered conductive to one end of the second bidirectional switch, and the sixth free-wheeling diode is so connected that the negative pole of the second DC power source is rendered conductive to another end of the second bidirectional switch.

15. An X-ray generator according to claim 13, wherein the current free-wheeling means (28) comprises first current free-wheeling means including first and second free-wheeling diodes (28a, b), and second current free-wheeling means including third and fourth free-wheeling diodes (28c, d), wherein:

the first current free-wheeling means is such that the first free-wheeling diode is so connected that the connection point of the two connection bodies of the first bidirectional switch (24a - 26a) is rendered conductive to the positive pole of the DC power source, and the second free-wheeling diode is so connected that the negative pole of the DC power source is rendered conductive to one end of the first bidirectional switch; and

the second current free-wheeling means is such that the third free-wheeling diode is so connected that the connection point of the two connection bodies of the second bidirectional switch (24b - 26b) is rendered conductive to the positive pole of the DC power source, and the fourth free-wheeling diode is so connected that the negative pole of the DC power source is rendered conductive to one end of the second bidirectional switch.

16. An X-ray generator according to claim 13, wherein the current free-wheeling means comprises first current free-wheeling means including first to third free-wheeling diodes (28a, 28a', 28b), and second current free-wheeling means including fourth to sixth free-wheeling diodes (28c, 28c', 28d), wherein:

the first current free-wheeling means is such that the first and second free-wheeling diodes are, respectively, so connected that both ends of the first bidirectional switch are rendered conductive to the positive pole of the DC power source, and the third free-wheeling diode is so connected that the negative pole of the DC power source is rendered conductive to the connection point of the two connection bodies of the first bidirectional switch (24a - 26a); and

the second current free-wheeling means is such that the fourth and fifth free-wheeling diodes are, respectively, so connected that both ends of the second bidirectional switch (24b - 26b) are rendered conductive to the positive pole of the DC power source, and the sixth free-wheeling diode is so connected that the negative pole of the DC power source is rendered conductive to the connection point of the two connection bodies of the second bidirectional switch.

17. An X-ray generator according to claim 13, wherein the current free-wheeling means (28) comprises first current free-wheeling means including first and second free-wheeling diodes (28a, 28b), and second current free-wheeling means including third and fourth free-wheeling diodes (28c, 28d), wherein:

the first current free-wheeling means is such that the first free-wheeling diode is so connected that one end of the first bidirectional switch (24a - 26a) is rendered conductive to the positive pole of the DC power source, and the second free-wheeling diode is so connected that the negative pole of the DC power source is rendered conductive to the connection point of the two connection bodies of the first bidirectional switch; and

the second current free-wheeling means is such that the third free-wheeling diode is so connected that one end of the second bidirectional switch (24b - 26b) is rendered conductive to the positive pole of the DC power source, and the fourth free-wheeling diode is so connected that the negative pole of the DC power source is rendered conductive to the connection point of the two connection bodies of the second bidirectional switch.

18. An X-ray generator according to claim 10, wherein each bidirectional switch (40, 41, 42) is constituted by a full-wave rectifier circuit including four diodes (41), and a semiconductor switching element (40) connected between the positive pole and the negative pole of the full-wave rectifier circuit, the positive pole of the switching element (40) being connected to the positive pole of the full-wave rectifier circuit and the negative pole of the switching element being connected to the negative pole of the full-wave rectifier circuit.

**19.** An X-ray generator according to claim 18, wherein the current free-wheeling means (28) comprises first current free-wheeling means including first and second free-wheeling diodes (28a, 28b), and second current free-wheeling means including third and fourth free-wheeling diodes (28c, 28d), wherein:

the first current free-wheeling means is such that the first free-wheeling diode is so connected that the positive pole of the first bidirectional switch (40a - 42a) is rendered conductive to the positive pole of the DC power source, and the second free-wheeling diode is so connected that the negative pole of the DC power source is rendered conductive to the negative pole of the first bidirectional switch; and
the second current free-wheeling means is such that the third free-wheeling diode is so connected that the positive pole of the second bidirectional switch (40b - 42b) is rendered conductive to the positive pole of the DC power source, and the fourth free-wheeling diode is so connected that the negative pole of the DC power source is rendered conductive to the negative pole of the second bidirectional switch.

**20.** An X-ray generator according to claim 18, wherein the current free-wheeling means (28) comprises first current free-wheeling means including first to fourth free-wheeling diodes (28a, 28a', 28b, 28b'), and second current free-wheeling means including fifth to eighth free-wheeling diodes (28c, 28c', 28d, 28d'), wherein:

the first current free-wheeling means is such that a connection point of a series connection body of the anode of the first free-wheeling diode and the cathode of the second free-wheeling diode is connected to one end of the first bidirectional switch (40a - 42a), the cathode of the first free-wheeling diode is connected to the positive pole of the first DC power source, the anode of the second free-wheeling diode is connected to the negative pole of the second DC power source, a connection point of a series connection body of the anode of the third free-wheeling diode and the cathode of the fourth free-wheeling diode is connected to another end of the first bidirectional switch, the cathode of the third free-wheeling diode is connected to the positive pole of the first DC power source, and the anode of the fourth free-wheeling diode is connected to the negative pole of the second DC power source; and
the second current free-wheeling means is such that a connection point of a series connection body of the anode of the fifth free-wheeling diode and the cathode of the sixth free-wheeling diode is connected to one end of the second bidirectional switch (40b - 42b), the cathode of the fifth free-wheeling diode is connected to the positive pole of the first DC power source, the anode of the sixth free-wheeling diode is connected to the negative pole of the second DC power source, a connection point of a series connection body of the anode of the seventh free-wheeling diode and the cathode of the eighth free-wheeling diode is connected to another end of the second bidirectional switch, the cathode of the seventh free-wheeling diode is connected to the positive pole of the first DC power source, and the anode of the eighth free-wheeling diode is connected to the negative pole of the second DC power source.

**21.** An X-ray generator according to claim 18, wherein the current free-wheeling means (28) comprises first current free-wheeling means including first and second free-wheeling diodes (28a, 28b), and second current free-wheeling means including third and fourth free-wheeling diodes (28c, 28d), wherein:

the first current free-wheeling means is such that a connection point of a series connection body of the anode of the first free-wheeling diode and the cathode of the second free-wheeling diode is connected to one end of the first bidirectional switch (40a - 42a), and the cathode of the first free-wheeling diode is connected to the positive pole of the first DC power source, the anode of the second free-wheeling diode is connected to the negative pole of the second DC power source; and
the second current free-wheeling means is such that a connection point of a series connection body of the anode of the third free-wheeling diode and the cathode of the fourth free-wheeling diode is connected to one end of the second bidirectional switch (40b, 42b), the cathode of the third free-wheeling diode is connected to the positive pole of the first DC power source, and the anode of the fourth free-wheeling diode is connected to the negative pole of the second DC power source.

**Patentansprüche**

**1.** Röntgenstrahlerzeuger umfassend:

einen Wandler (4) zum Wandeln einer Wechselstromspannung aus einer Wechselstromquelle (1) in eine Gleichstromspannung;

einen Wechselrichter (5) zum Wandeln der Gleichstromspannung aus dem Wandler in eine Wechselstromspannung;

einen Hochspannungstransformator (8) zum Verstärken der Wechselstromspannung aus dem Wechselrichter;

einen Gleichrichter (9) zum Gleichrichten der vom Hochspannungstransformator verstärkten Wechselstromspannung in eine Gleichstromspannung; und

eine Röntgenröhre (11) zum Ausstrahlen von Röntgenstrahlen bei Versorgung mit einer durch den Gleichrichter gleichgerichteten Gleichstrom-Hochspannung;

wobei der Wandler (4) eine Zweiweg-Gleichrichterschaltung, die ein selbstlöschendes Halbleiterschaltelement enthält, zwischen den Wechselstrom-Eingangsanschlüssen der Zweiweg-Gleichrichterschaltung und der Wechselstromquelle (1) geschaltete Induktoren (31) sowie eine Wandlersteuerung (12) zum Steuern des selbstlöschenden Schaltelements umfasst, so dass der Phasenstrom und die Phasenspannung der Wechselstromquelle in Übereinstimmung miteinander gebracht werden und dass die Ausgangsspannung der Zweiweg-Gleichrichterschaltung in Übereinstimmung mit einer Zielspannung gebracht wird; und

wobei der Wechselrichter (5) ein Halbleiterschaltelement (20) und eine Nullspannungsschalteinrichtung (23-27) zum An- und Ausschalten des Halbleiterschaltelements und zum Setzen der Spannung des Halbleiterschaltelements auf nahezu Null in dem Moment, in dem es an- und ausgeschaltet wird, eine Stromfreilaufeinrichtung (28) zum Freilaufenlassen des in die Nullspannungsschalteinrichtung (23-27) fließenden Stroms, wenn die Nullspannungsschalteinrichtung (23-27) abgeschaltet wird, sowie eine Steuerungseinrichtung (13) zum Steuern der Zeitabstimmung zum An- und Ausschalten des Halbleiterschaltelements (20) des Wechselrichters auf Signale (S1, S2) zum Ansetzen der auf die Röntgenröhre (11) angewendeten Spannung und Strom hin umfasst.

2. Röntgenstrahlerzeuger gemäß Anspruch 1, wobei das Nullspannungsschaltelement einen bidirektionalen Schalter (24, 25, 26) umfasst und die Stromfreilaufeinrichtung (28) mit der Wandler- oder der Hochspannungstransformatorseite des bidirektionalen Schalters verbunden ist.

3. Röntgenstrahlerzeuger gemäß Anspruch 2, wobei die Stromfreilaufeinrichtung zwei in Serie geschaltete Dioden (28) umfasst.

4. Röntgenstrahlerzeuger gemäß Anspruch 3, wobei eine der zwei Dioden (28) mit der Seite positiver Spannung des Wandlers (4) und die andere mit der Seite negativer Spannung des Wandlers verbunden sind.

5. Röntgenstrahlerzeuger gemäß Anspruch 3 oder 4, wobei eine (28a, 28c) der zwei Dioden (28) mit einem Verbindungspunkt des bidirektionalen Schalters (24, 25, 26) verbunden ist.

6. Röntgenstrahlerzeuger gemäß einem der Ansprüche 2 bis 5, wobei der Wechselrichter (25) umfasst:

einen ersten Serienschaltungskörper mit einem mit einem positiven Spannungspol verbundenen ersten Schaltelement (20a) und einem mit einem negativen Spannungspol verbundenen zweiten Schaltelement (20b), einen zweiten Serienschaltungskörper, der mit dem ersten Serienschaltungskörper parallel geschaltet ist und ein mit dem positiven Spannungspol verbundenes drittes Schaltelement (20c) und ein mit dem negativen Spannungspol verbundenes viertes Schaltelement (20d) enthält, und
erste bis vierte Dioden (3a-3d) und Kondensatoren (22a-22d), die umgekehrt zu den ersten bis vierten Schaltelementen parallel geschaltet sind.

7. Röntgenstrahlerzeuger nach Anspruch 6, wobei die Stromfreilaufeinrichtung Dioden (3, 28) umfasst, die parallel mit einem der ersten bis vierten Schaltelemente geschaltet sind.

8. Röntgenstrahlerzeuger nach Anspruch 6 oder 7, wobei die Stromfreilaufeinrichtung (28) zwischen dem ersten oder dem zweiten Serienschaltungskörper und dem Anschluss des bidirektionalen Schalters (24, 25, 26) auf der Wandlerseite angeordnet ist.

9. Röntgenstrahlerzeuger nach einem der Ansprüche 1 bis 8, wobei der Wechselrichter (5) umfasst:

einen ersten Serienschaltungskörper mit einem mit dem positiven Pol der Gleichstromspannung aus dem Wandler (4) verbundenen ersten Schaltelement (20a) und einem mit dem negativen Pol davon verbundenen zweiten Schaltelement (20b);
einen parallel zum ersten Serienschaltungskörper geschalteten zweiten Serienschaltungskörper mit einem mit dem positiven Pol verbundenen dritten Schaltelement (20c) und einem mit dem negativen Pol verbundenen vierten Schaltelement (20d);
erste bis vierte Dioden (3a-3d) und Kondensatoren (22a-22d), die umgekehrt zu den ersten bis vierten Schaltelementen parallel geschaltet sind;
eine erste Hilfsstromzuführungseinrichtung (23a-27a) zum Zuführen eines Stroms in der Vorwärtsrichtung der ersten und der zweiten Diode, wenn das erste und das zweite Schaltelement an- und ausgeschaltet werden; und eine zweite Hilfsstromzuführungseinrichtung (23b-27b) zum Zuführen eines Stroms in der Vorwärtsrichtung der dritten und der vierten Diode, wenn das dritte und das vierte Schaltelement an- und ausgeschaltet werden; und wobei die Stromfreilaufeinrichtung (28) den Strom frei laufen lässt, wenn der durch die erste und die zweite Hilfsstromzuführungseinrichtung fließende Strom abgeschaltet wird.

10. Röntgenstrahlerzeuger nach Anspruch 9, wobei der Wandler (4) eine Gleichstromquelle mit einer ersten und einer zweiten Gleichstromquelle aufweist, die in Serie geschaltet sind, wobei deren Verbindungspunkt als ein Nullpunkt wirkt, wobei die erste Hilfsstromzuführungseinrichtung (23a-27a) ein Serienschaltungselement eines ersten Induktors (23a) und einen zwischen dem Nullpunkt der Gleichstromquelle und dem Verbindungspunkt des ersten und des zweiten Schaltelements (20a, b) geschalteten ersten bidirektionalen Schalter (24a-26a) aufweist, die zweite Hilfsstromzuführungseinrichtung (23-27b) ein Serienschaltungselement eines zweiten Induktors (23b) und einen zwischen dem Nullpunkt der Gleichstromquelle und dem Verbindungspunkt des dritten und des vierten Schaltelements (20c, d) geschalteten zweiten bidirektionalen Schalter (24b-26b) aufweist und die Stromfreilaufeinrichtung (28) den durch die erste und die zweite Hilfsstromzuführungseinrichtung fließenden Strom frei laufen lässt, wenn der erste und der zweite bidirektionale Schalter aus dem leitenden Zustand nicht-leitend werden.

11. Röntgenstrahlerzeuger nach Anspruch 10, wobei die Stromfreilaufeinrichtung (28) umfasst:

eine erste Stromfreilaufeinrichtung, bei der ein Verbindungspunkt eines Serienschaltungskörpers der Anode einer ersten Freilaufdiode (28a) und der Kathode einer zweiten Freilaufdiode (28b) mit einem Verbindungspunkt des ersten Induktors (23a) und des ersten bidirektionalen Schalters (24a-26a) verbunden ist, wobei die Kathode der ersten Freilaufdiode mit dem positiven Pol der ersten Gleichstromquelle verbunden ist und die Anode der zweiten Freilaufdiode mit dem negativen Pol der zweiten Gleichstromquelle verbunden ist; und
eine zweite Stromfreilaufeinrichtung, bei der ein Verbindungspunkt eines Serienschaltungskörpers der Anode der dritten Freilaufdiode (28c) und der Kathode der vierten Freilaufdiode (28d) mit einem Verbindungspunkt des zweiten Induktors (23b) und des zweiten bidirektionalen Schalters (24b-26b) verbunden ist, wobei die Kathode der dritten Freilaufdiode mit dem positiven Pol der ersten Gleichstromquelle verbunden ist und die Anode der vierten Freilaufdiode mit dem negativen Pol der zweiten Gleichstromquelle verbunden ist.

12. Röntgenstrahlerzeuger nach Anspruch 10, wobei die Stromfreilaufeinrichtung (28) umfasst:

eine erste Stromfreilaufeinrichtung, bei der ein Verbindungspunkt eines Serienschaltungskörpers der Anode einer ersten Freilaufdiode (28a) und der Kathode einer zweiten Freilaufdiode (28b) mit einem Ende des ersten bidirektionalen Schalters (24a-26a) verbunden ist, die Kathode der ersten Freilaufdiode mit dem positiven Pol der ersten Gleichstromquelle verbunden ist und die Anode der zweiten Freilaufdiode mit dem negativen Pol der zweiten Gleichstromquelle verbunden ist;
eine zweite Stromfreilaufeinrichtung, bei der ein Verbindungspunkt eines Serienschaltungskörpers der Anode einer dritten Freilaufdiode (28a') und der Kathode einer vierten Freilaufdiode (28b') mit einem anderen Ende des ersten bidirektionalen Schalters verbunden ist, die Kathode der dritten Freilaufdiode mit dem positiven Pol der ersten Gleichstromquelle verbunden ist und die Anode der vierten Freilaufdiode mit dem negativen Pol der zweiten Gleichstromquelle verbunden ist;
eine dritte Stromfreilaufeinrichtung, bei der ein Verbindungspunkt eines Serienschaltungskörpers der Anode einer fünften Freilaufdiode (28c) und der Kathode einer sechsten Freilaufdiode (28d) mit einem Ende des zweiten bidirektionalen Schalters (24b-26b) verbunden ist, die Kathode der fünften Freilaufdiode mit dem positiven Pol der ersten Gleichstromquelle verbunden ist und die Anode der sechsten Freilaufdiode mit dem negativen Pol der zweiten Gleichstromquelle verbunden ist; und
eine vierte Stromfreilaufeinrichtung, bei der ein Verbindungspunkt eines Serienschaltungskörpers der Anode einer siebten Freilaufdiode (28c') und der Kathode einer achten Freilaufdiode (28d') mit einem anderen Ende des zweiten bidirektionalen Schalters verbunden ist, die Kathode der siebten Freilaufdiode mit dem positiven Pol der ersten Gleichstromquelle verbunden ist und die Anode der achten Freilaufdiode mit dem negativen Pol der zweiten Gleichstromquelle verbunden ist.

13. Röntgenstrahlerzeuger nach Anspruch 10, wobei die bidirektionalen Schalter (24, 25, 26) jeweils durch zwei Verbindungskörper gebildet sind, die jeweils ein Halbleiterschaltelement (24) und eine umgekehrt zum Schaltelement (24) parallel geschaltete Diode (25) umfassen, und so geschaltet sind, dass die Leitungsrichtungen der Schaltelemente der Verbindungskörper entgegengesetzt zueinander sind.

14. Röntgenstrahlerzeuger nach Anspruch 13, wobei die Stromfreilaufeinrichtung (28) eine erste Stromfreilaufeinrichtung mit ersten bis dritten Freilaufdioden (28a, 28b, 28b'), und eine zweite Stromfreilaufeinrichtung mit vierten bis sechsten Freilaufdioden (28c, 28d, 28d') umfasst, wobei
die erste Stromfreilaufeinrichtung so beschaffen ist, dass die erste Freilaufdiode so geschaltet ist, dass der Verbindungspunkt der zwei Verbindungskörper des ersten bidirektionalen Schalters (24a-26a) zum positiven Pol der ersten Gleichstromquelle leitend gemacht ist, die zweite Freilaufdiode so geschaltet ist, dass der negative Pol der zweiten Gleichstromquelle zu einem Ende des ersten bidirektionalen Schalters leitend gemacht ist und die dritte Freilaufdiode so geschaltet ist, dass der negative Pol der zweiten Gleichstromquelle zu einem anderen Ende des ersten bidirektionalen Schalters leitend gemacht ist; und
die zweite Stromfreilaufeinrichtung so beschaffen ist, dass die vierte Freilaufdiode so geschaltet ist, dass der Verbindungspunkt der zwei Verbindungskörper des zweiten bidirektionalen Schalters (24b-26b) zum positiven Pol der ersten Gleichstromquelle leitend gemacht ist, die fünfte Freilaufdiode so geschaltet ist, dass der negative Pol der zweiten Gleichstromquelle zu einem Ende des zweiten bidirektionalen Schalters leitend gemacht ist und die sechste Freilaufdiode so geschaltet ist, dass der negative Pol der zweiten Gleichstromquelle zu einem anderen Ende des zweiten bidirektionalen Schalters leitend gemacht ist.

15. Röntgenstrahlerzeuger nach Anspruch 13, wobei die Stromfreilaufeinrichtung (28) eine erste Stromfreilaufeinrichtung mit einer ersten und einer zweiten Freilaufdiode (28a, b) und eine zweite Stromfreilaufeinrichtung mit einer dritten und einer vierten Freilaufdiode (28c, d) umfasst, wobei:

die erste Stromfreilaufeinrichtung so beschaffen ist, dass die erste Freilaufdiode so geschaltet ist, dass der Verbindungspunkt der zwei Verbindungskörper des ersten bidirektionalen Schalters (24a-26a) zum positiven Pol der Gleichstromquelle leitend gemacht ist, und die zweite Freilaufdiode so geschaltet ist, dass der negative Pol der Gleichstromquelle leitend zu einem Ende des ersten bidirektionalen Schalters leitend gemacht ist; und
die zweite Stromfreilaufeinrichtung so beschaffen ist, dass die dritte Freilaufdiode so geschaltet ist, dass der Verbindungspunkt der zwei Verbindungskörper des zweiten bidirektionalen Schalters (24b-26b) zum positiven Pol der Gleichstromquelle leitend gemacht ist, und die vierte Freilaufdiode so geschaltet ist, dass der negative Pol der Gleichstromquelle zu einem Ende des zweiten bidirektionalen Schalters leitend gemacht ist.

16. Röntgenstrahlerzeuger nach Anspruch 13, wobei die Stromfreilaufeinrichtung eine erste Stromfreilaufeinrichtung mit ersten bis dritten Freilaufdioden (28a, 28a', 28b) und eine zweite Stromfreilaufeinrichtung mit vierten bis sechsten Freilaufdioden (28c, 28c', 28d) umfasst, wobei:

die erste Stromfreilaufeinrichtung so beschaffen ist, dass die erste und die zweite Freilaufdiode jeweils so geschaltet sind, dass beide Enden des ersten bidirektionalen Schalters zum positiven Pol der Gleichstromquelle leitend gemacht sind, und die dritte Freilaufdiode so geschaltet ist, dass der negative Pol der Gleichstromquelle zum Verbindungspunkt der zwei Verbindungskörper des ersten bidirektionalen Schalters (24a-26a) leitend gemacht ist; und
die zweite Stromfreilaufeinrichtung so beschaffen ist, dass die vierte und die fünfte Freilaufdiode jeweils so geschaltet sind, dass beide Enden des zweiten bidirektionalen Schalters (24b-26b) zum positiven Pol der Gleichstromquelle leitend gemacht sind, und dass die sechste Freilaufdiode so geschaltet ist, dass der negative Pol der Gleichstromquelle zum Verbindungspunkt der zwei Verbindungskörper des zweiten bidirektionalen Schalters leitend gemacht ist.

17. Röntgenstrahlerzeuger nach Anspruch 13, wobei die Stromfreilaufeinrichtung (28) eine erste Stromfreilaufeinrichtung mit einer ersten und einer zweiten Freilaufdiode (28a, 28b) und eine zweite Stromfreilaufeinrichtung mit einer dritten und einer vierten Freilaufdiode (28c, 28d) umfasst, wobei:

die erste Stromfreilaufeinrichtung so beschaffen ist, dass die erste Freilaufdiode so geschaltet ist, dass ein Ende des ersten bidirektionalen Schalters (24a-26a) zum positiven Pol der Gleichstromquelle leitend gemacht ist, und die zweite Freilaufdiode so geschaltet ist, dass der negative Pol der Gleichstromquelle zum Verbindungspunkt der zwei Verbindungskörper des ersten bidirektionalen Schalters leitend gemacht ist; und
die zweite Stromfreilaufeinrichtung so beschaffen ist, dass die dritte Freilaufdiode so geschaltet ist, dass ein Ende des zweiten bidirektionalen Schalters (24b-26b) zum positiven Pol der Gleichstromquelle leitend gemacht ist, und dass die vierte Freilaufdiode so geschaltet ist, dass der negative Pol der Gleichstromquelle zum Verbindungspunkt der zwei Verbindungskörper des zweiten bidirektionalen Schalters leitend gemacht ist.

18. Röntgenstrahlerzeuger nach Anspruch 10, wobei jeder bidirektionale Schalter (40, 41, 42) durch eine Zweiweg-Gleichrichterschaltung mit vier Dioden (41) sowie ein zwischen dem positiven Pol und dem negativen Pol der Zweiweg-Gleichrichterschaltung geschaltetes Halbleiterschaltelement (40) gebildet ist, wobei der positive Pol des Schaltelements (40) mit dem positiven Pol der Zweiweg-Gleichrichterschaltung verbunden ist und der negative Pol des Schaltelements mit dem negativen Pol der Zweiweg-Gleichrichterschaltung verbunden ist.

19. Röntgenstrahlerzeuger nach Anspruch 18, wobei die Stromfreilaufeinrichtung (28) eine erste Stromfreilaufeinrichtung mit einer ersten und einer zweiten Freilaufdiode (28a, 28b) und eine zweite Stromfreilaufeinrichtung mit einer dritten und einer vierten Freilaufdiode (28c, 28d) umfasst, wobei:

die erste Stromfreilaufeinrichtung so beschaffen ist, dass die erste Freilaufdiode so geschaltet ist, dass der positive Pol des ersten bidirektionalen Schalters (40a-42a) zum positiven Pol der Gleichstromquelle leitend gemacht ist, und dass die zweite Freilaufdiode so geschaltet ist, dass der negative Pol der Gleichstromquelle zum negativen Pol des ersten bidirektionalen Schalters leitend gemacht ist; und
die zweite Stromfreilaufeinrichtung so beschaffen ist, dass die dritte Freilaufdiode so geschaltet ist, dass der positive Pol des zweiten bidirektionalen Schalters (40b-42b) zum positiven Pol der Gleichstromquelle leitend gemacht ist, und dass die vierte Freilaufdiode so geschaltet ist, dass der negative Pol der Gleichstromquelle zum negativen Pol des zweiten bidirektionalen Schalters leitend gemacht ist.

20. Röntgenstrahlerzeuger nach Anspruch 18, wobei die Stromfreilaufeinrichtung (28) eine erste Stromfreilaufeinrichtung mit ersten bis vierten Freilaufdioden (28a, 28a', 28b, 28b') und eine zweite Stromfreilaufeinrichtung mit fünften bis achten Freilaufdioden (28c, 28c', 28d, 28d') umfasst, wobei:

die erste Stromfreilaufeinrichtung so beschaffen ist, dass ein Verbindungspunkt eines Serienschaltungskörpers der Anode der ersten Freilaufdiode und der Kathode der zweiten Freilaufdiode mit einem Ende des ersten bidirektionalen Schalters (40a-42a) verbunden ist, die Kathode der ersten Freilaufdiode mit dem positiven Pol der ersten Gleichstromquelle verbunden ist, die Anode der zweiten Freilaufdiode mit dem negativen Pol der zweiten Gleichstromquelle verbunden ist, ein Verbindungspunkt eines Serienschaltungskörpers der Anode der dritten Freilaufdiode und der Kathode der vierten Freilaufdiode mit einem anderen Ende des ersten bidirektionalen Schalters verbunden ist, die Kathode der dritten Freilaufdiode mit dem positiven Pol der ersten Gleichstromquelle verbunden ist und die Anode der vierten Freilaufdiode mit dem negativen Pol der zweiten Gleichstromquelle verbunden ist; und
die zweite Stromfreilaufeinrichtung so beschaffen ist, dass ein Verbindungspunkt eines Serienschaltungskörpers der Anode der fünften Freilaufdiode und der Kathode der sechsten Freilaufdiode mit einem Ende des zweiten bidirektionalen Schalters (40a-42b) verbunden ist, die Kathode der fünften Freilaufdiode mit dem positiven Pol der ersten Gleichstromquelle verbunden ist, die Anode der sechsten Freilaufdiode mit dem negativen Pol der zweiten Gleichstromquelle verbunden ist, ein Verbindungspunkt eines Serienschaltungskörpers der Anode der siebten Freilaufdiode und der Kathode der achten Freilaufdiode mit einem anderen Ende des zweiten bidirektionalen Schalters verbunden ist, die Kathode der siebten Freilaufdiode mit dem positiven Pol der ersten Gleichstromquelle verbunden ist und die Anode der achten Freilaufdiode mit dem negativen Pol der zweiten Gleichstromquelle verbunden ist.

21. Röntgenstrahlerzeuger nach Anspruch 18, wobei die Stromfreilaufeinrichtung (28) eine erste Stromfreilaufeinrichtung mit einer ersten und einer zweiten Freilaufdiode (28a, 28b) und eine zweite Stromfreilaufeinrichtung mit einer dritten und einer vierten Freilaufdiode (28c, 28d) umfasst, wobei:

die erste Stromfreilaufeinrichtung so beschaffen ist, dass ein Verbindungspunkt eines Serienschaltungskörpers der Anode der ersten Freilaufdiode und der Kathode der zweiten Freilaufdiode mit einem Ende des ersten bidirektionalen Schalters (40a-42a) verbunden ist, und die Kathode der ersten Freilaufdiode mit dem positiven Pol der ersten Gleichstromquelle verbunden ist, die Anode der zweiten Freilaufdiode mit dem negativen Pol der zweiten Gleichstromquelle verbunden ist; und
die zweite Stromfreilaufeinrichtung so beschaffen ist, dass ein Verbindungspunkt eines Serienschaltungskörpers der Anode der dritten Freilaufdiode und der Kathode der vierten Freilaufdiode mit einem Ende des zweiten bidirektionalen Schalters (40b-42b) verbunden ist, die Kathode der dritten Freilaufdiode mit dem positiven Pol der ersten Gleichstromquelle verbunden ist und die Anode der vierten Freilaufdiode mit dem negativen Pol der zweiten Gleichstromquelle verbunden ist.

**Revendications**

1.  Générateur de rayons X comportant :

    un convertisseur (4) pour convertir une tension alternative provenant d'une source de courant alternative (1) en une tension continue,
    un onduleur (5) pour convertir la tension continue provenant du convertisseur en une tension alternative,
    un transformateur haute tension (8) pour amplifier la tension alternative provenant de l'onduleur,
    un redresseur (9) pour redresser la tension alternative amplifiée par le transformateur haute tension en une tension continue, et
    un tube à rayons X (11) pour rayonner des rayons X lorsqu'il reçoit une haute tension continue redressée via le redresseur,
    dans lequel le convertisseur (4) comporte un circuit redresseur à double alternance incluant un élément de commutation semi-conducteur auto-extincteur, des inductances (31) connectées entre les bornes d'entrée de courant alternatif du circuit redresseur à double alternance et la source de courant alternatif (1), et un dispositif de commande de convertisseur (12) pour commander l'élément de commutation auto-extincteur de sorte que le courant de phase et la tension de phase de la source de courant alternatif sont amenés en concordance entre eux et que la tension de sortie du circuit redresseur à double alternance est amenée en concordance avec une tension cible, et
    l'onduleur (5) comporte un élément de commutation semi-conducteur (20) et des moyens de commutation à tension nulle (23-27) pour rendre l'élément de commutation semi-conducteur passant et bloqué et établir la tension de l'élément de commutation semi-conducteur presque à zéro au moment où il est rendu passant et bloqué, des moyens de roue libre (28) pour mettre en roue libre le courant circulant dans les moyens de commutation à tension nulle (23-27) lorsque les moyens de commutation à tension nulle (23-27) sont mis hors tension, et des moyens de commande (13) pour commander la synchronisation pour rendre passant et bloqué l'élément de commutation semi-conducteur (20) de l'onduleur en réponse à des signaux (S1, S2) pour établir la tension et le courant appliqués au tube à rayons X (11).

2.  Générateur de rayons X selon la revendication 1, dans lequel les moyens de commutation à tension nulle comportent un commutateur bidirectionnel (24, 25, 26), et les moyens de roue libre de courant (28) sont connectés côté convertisseur ou côté transformateur haute tension du commutateur bidirectionnel.

3.  Générateur de rayons X selon la revendication 2, dans lequel les moyens de roue libre de courant comportent deux diodes (28) montées en série.

4.  Générateur de rayons X selon la revendication 3, dans lequel l'une des deux diodes (28) est connectée au côté tension positive du convertisseur (4) et l'autre est connectée au côté tension négative du convertisseur.

5.  Générateur de rayons X selon la revendication 3 ou 4, dans lequel l'une (28a, 28c) des deux diodes (28) est connectée à un point de connexion du commutateur bidirectionnel (24, 25, 26).

6.  Générateur de rayons X selon l'une quelconque des revendications 2 à 5, dans lequel l'onduleur (25) comporte un premier corps de connexion série incluant un premier élément de commutation (20a) connecté à un pôle de tension positif et un deuxième élément de commutation (20b) connecté à un pôle de tension négatif, un second corps de connexion série monté en parallèle avec le premier corps de connexion série et incluant un troisième élément de commutation (20c) connecté au pôle de tension positif, et un quatrième élément de commutation (20d) connecté au pôle de tension négatif, et des première à quatrième diodes (3a ~ 3d) et des condensateurs (22a ~ 22d) montés en parallèle inverse avec les premier à quatrième éléments de commutation.

7.  Générateur de rayons X selon la revendication 6, dans lequel les moyens de roue libre de courant comportent des diodes (3, 28) montées en parallèle avec l'un des premier à quatrième éléments de commutation.

8.  Générateur de rayons X selon les revendications 6 ou 7, dans lequel les moyens de roue libre de courant (28) sont disposés entre le premier ou le second corps de connexion série et la borne côté convertisseur du commutateur bidirectionnel (24, 25, 26).

9. Générateur de rayons X selon l'une quelconque des revendications 1 à 8, dans lequel l'onduleur (5) comporte :

un premier corps de connexion série incluant un premier élément de commutation (20a) connecté au pôle positif de la tension continue provenant du convertisseur (4) et un deuxième élément de commutation (2b) connecté au pôle négatif de celle-ci,
un second corps de connexion série monté en parallèle avec le premier corps de connexion série et incluant un troisième élément de commutation (20c) connecté au pôle positif et un quatrième élément de commutation (20d) connecté au pôle négatif,
des première à quatrième diodes (3a-3d) et des condensateurs (22a-22d) montés en parallèle inverse avec les premier à quatrième éléments de commutation,
des premiers moyens auxiliaires d'alimentation en courant (23a-27a) pour délivrer un courant dans la direction avant des première et deuxième diodes lorsque les premier et deuxième éléments de commutation sont rendus passants et bloqué, et
des seconds moyens auxiliaires d'alimentation en courant (23b-27b) pour délivrer un courant dans la direction avant des troisième et quatrième diodes lorsque les troisième et quatrième éléments de commutation sont rendus passants et bloqués,
et dans lequel les moyens de roue libre de courant (28) mettent le courant en roue libre lorsque le courant circulant à travers les premiers et seconds moyens auxiliaires d'alimentation en courant est coupé.

10. Générateur de rayons X selon la revendication 9, dans lequel le convertisseur (4) réalise une source de courant continu ayant une première source de courant continu et une seconde source de courant continu montées en série, avec le point de connexion de celles-ci en tant que point neutre, les premiers moyens auxiliaires d'alimentation en courant (23a-27a) ont un élément de connexion série d'une première inductance (23a) et d'un premier commutateur bidirectionnel (24a-26a) connectés entre le point neutre de la source de courant continu et le point de connexion des premier et deuxième éléments de commutation (20a, b), les seconds moyens auxiliaires d'alimentation en courant (23b-27b) ont un élément de connexion série d'une seconde bobine d'inductance (23b) et d'un second commutateur bidirectionnel (24b-26b) connectés entre le point neutre de la source de courant continu et le point de connexion des troisième et quatrième éléments de commutation (20c, d), et les moyens de roue libre de courant (28) mettent en roue libre le courant circulant à travers les premiers et seconds moyens auxiliaires d'alimentation en courant lorsque les premier et second commutateurs bidirectionnels sont rendus non-conducteurs à partir de l'état conducteur.

11. Générateur de rayons X selon la revendication 10, dans lequel les moyens de roue libre de courant (28) incluent :

des premiers moyens de roue libre de courant dans lesquels un point de connexion d'un corps de connexion série de l'anode d'une première diode de roue libre (28a) et de la cathode d'une seconde diode de roue libre (28b), est connecté à un point de connexion de la première inductance (23a) et du premier commutateur bidirectionnel (24a, 26a), la cathode de la première diode de roue libre est connectée au pôle positif de la première source de courant continu, et l'anode de la deuxième diode de roue libre est connectée au pôle négatif de la seconde source de courant continu, et
des deuxièmes moyens de roue libre de courant dans lesquels un point de connexion d'un corps de connexion série de l'anode de la troisième diode de roue libre (28c) et de la cathode de la quatrième diode de roue libre (28d), est connecté à un point de connexion de la seconde inductance (23b) et du second commutateur bidirectionnel (24b-26b), la cathode de la troisième diode de roue libre est connectée au pôle positif de la première source de courant continu, et l'anode de la quatrième diode de roue libre est connectée au pôle négatif de la seconde source de courant continu.

12. Générateur de rayons X selon la revendication 10, dans lequel les moyens de roue libre de courant (28) incluent :

des premiers moyens de roue libre de courant dans lesquels un point de connexion d'un corps de connexion série de l'anode de la première diode de roue libre (28a) et de la cathode d'une deuxième diode de roue libre (28b) est connecté à une extrémité du premier commutateur bidirectionnel (24a-26a), la cathode de la première diode de roue libre est connectée au pôle positif de la première source de courant continu, et l'anode de la deuxième diode de roue libre est connectée au pôle négatif de la seconde source de courant continu,
des deuxième moyens de roue libre de courant dans lesquels un point de connexion d'un corps de connexion série de l'anode d'une troisième diode de roue libre (28a') et de la cathode d'une quatrième diode de roue libre (28b'), est connecté à une autre extrémité du premier commutateur bidirectionnel, la cathode de la troisième diode de roue libre est connectée au pôle positif de la première source de courant continu, et l'anode de la quatrième diode de roue libre est connectée au pôle négatif de la seconde source de courant continu, des troisièmes moyens de roue libre de courant dans lesquels un point de connexion d'un corps de connexion série de l'anode d'une cinquième diode de roue libre (28c) et de la cathode d'une sixième diode de roue libre (28d), est connecté à une autre extrémité du second commutateur bidirectionnel (24b-26b), la cathode de la cinquième diode de roue libre est connectée au pôle positif de la première source de courant continu, et l'anode de la sixième diode de roue libre est connectée au pôle négatif de la seconde source de courant continu, et des quatrièmes moyens de roue libre de courant dans lesquels un point de connexion d'un corps de connexion série de l'anode d'une septième diode de roue libre (28c') et de la cathode d'une huitième diode de roue libre (28d'), est connecté à une autre extrémité du second commutateur bidirectionnel, la cathode de la septième diode de roue libre est connectée au pôle positif de la première source de courant continu, et l'anode de la huitième diode de roue libre est connectée au pôle négatif de la seconde source de courant continu.

13. Générateur de rayons X selon la revendication 10, dans lequel chaque commutateur bidirectionnel (24, 25, 26) est constitué par deux corps de connexion, chacun comportant un élément de commutation semi-conducteur (24) et une diode (25) montée en parallèle inverse avec l'élément de commutation (24), et connectés de sorte que les directions de conduction des éléments de commutation des corps de connexion sont mutuellement opposées.

14. Générateur de rayons X selon la revendication 13, dans lequel les moyens de roue libre de courant (28) comportent des premiers moyens de roue libre de courant incluant des première à quatrième diodes de roue libre (28a, 28b, 28b'), et des deuxièmes moyens de roue libre de courant incluant des quatrième à sixième diodes de roue libre (28c, 28d, 28d'), dans lequel :

les premiers moyens de roue libre de courant sont tels que la première diode de roue libre est connectée de sorte que le point de connexion des deux corps de connexion du premier commutateur bidirectionnel (24a-26a) est rendu conducteur jusqu'au pôle positif de la première source de courant continu, la deuxième diode de roue libre est connectée de sorte que le pôle négatif de la seconde source de courant continu est rendu conducteur jusqu'à une extrémité du premier commutateur bidirectionnel, et la troisième diode de roue libre est connectée de sorte que le pôle négatif de la seconde source de courant continu est rendu conducteur jusqu'à une autre extrémité du premier commutateur bidirectionnel, et les deuxièmes moyens de roue libre de courant sont tels que la quatrième diode de roue libre est connectée de sorte que le point de connexion des deux corps de connexion du second commutateur bidirectionnel (24b-26b) est rendu conducteur jusqu'au pôle positif de la première source de courant continu, la cinquième diode de roue libre est connectée de sorte que le pôle négatif de la seconde source de courant continu est rendu conducteur jusqu'à une extrémité du second commutateur bidirectionnel, et la sixième diode de roue libre est connectée de sorte que le pôle négatif de la seconde source de courant continu est rendu conducteur jusqu'à une extrémité du second commutateur bidirectionnel.

15. Générateur de rayons X selon la revendication 13, dans lequel les moyens de roue libre de courant (28) comportent des premiers moyens de roue libre de courant incluant des première et deuxième diodes de roue libre (28a, 28b), et des deuxièmes moyens de roue de courant incluant des troisième et quatrième diodes de roue libre (28c, d), dans lequel :

les premiers moyens de roue libre de courant sont tels que la première diode de roue libre est connectée de sorte que le point de connexion des deux corps de connexion du premier commutateur bidirectionnel (24a-26a) est rendu conducteur jusqu'au pôle positif de la source de courant continu, et la deuxième diode de roue libre est connectée de sorte que le pôle négatif de la source de courant continu est rendu conducteur jusqu'à une extrémité du premier commutateur bidirectionnel, et les deuxièmes moyens de roue libre de courant sont tels que la troisième diode de roue libre est connectée de sorte que le point de connexion des deux corps de connexion du second commutateur bidirectionnel (24b-26b) est rendu conducteur jusqu'au pôle positif de la source de courant continu, et la quatrième diode de roue libre est connectée de sorte que le pôle négatif de la source de courant continu est rendu conducteur jusqu'à une extrémité du second commutateur bidirectionnel.

16. Générateur de rayons X selon la revendication 13, dans lequel les moyens de roue libre de courant comportent des premiers moyens de roue libre de courant incluant des première à troisième diodes de roue libre (28a, 28a', 28b), et des deuxièmes moyens de roue libre de courant incluant des quatrième à sixième diodes de roue libre (28c, 28c', 28d), dans lequel :

les premiers moyens de roue libre de courant sont tels que les première et deuxième diodes de roue libre sont, respectivement, connectées de sorte que les deux extrémités du premier commutateur bidirectionnel sont rendues conductrices jusqu'au pôle positif de la source de courant continu, et la troisième diode de roue libre est connectée de sorte que le pôle négatif de la source de courant continu est rendu conducteur jusqu'au point de connexion des deux corps de connexion du premier commutateur bidirectionnel (24a-26a), et

les deuxièmes moyens de roue libre de courant sont tels que les quatrième et cinquième diodes de roue libre sont, respectivement, connectées de sorte que les deux extrémités du second commutateur bidirectionnel (24b-26b) sont rendues conductrices jusqu'au pôle positif de la source de courant continu, et la sixième diode de roue libre est connectée de sorte que le pôle négatif de la source de courant continu est rendu conducteur jusqu'au point de connexion des deux corps de connexion du second commutateur bidirectionnel.

17. Générateur de rayons X selon la revendication 13, dans lequel les moyens de roue libre de courant (28) comportent des premiers moyens de roue libre de courant incluant des première et deuxième diodes de roue libre (28a, 28b), et des deuxièmes moyens de roue libre de courant incluant des troisième et quatrième diodes de roue libre (28c, 28d), dans lequel :

les premiers moyens de roue libre de courant sont tels que la première diode de roue libre est connectée de sorte qu'une extrémité du premier commutateur bidirectionnel (24a-26a) est rendue conductrice jusqu'au pôle positif de la source de courant continu, et la deuxième diode de roue libre est connectée de sorte que le pôle négatif de la source de courant continu est rendu conducteur jusqu'au point de connexion des deux corps de connexion du premier commutateur bidirectionnel, et

les deuxièmes moyens de roue libre de courant sont tels que la troisième diode de roue libre est connectée de sorte qu'une extrémité du second commutateur bidirectionnel (24b-26b) est rendue conductrice jusqu'au pôle positif de la source de courant continu, et la quatrième diode de roue libre est connectée de sorte que le pôle négatif de la source de courant continu est rendu conducteur jusqu'au point de connexion des deux corps de connexion du second commutateur bidirectionnel.

18. Générateur de rayons X selon la revendication 10, dans lequel chaque commutateur bidirectionnel (40, 41, 42) est constitué par un circuit redresseur à double alternance incluant quatre diodes (41) et un élément de commutation semi-conducteur (40) connecté entre le pôle positif et le pôle négatif du circuit redresseur à double alternance, le pôle positif de l'élément de commutation (40) étant connecté au pôle positif du circuit redresseur à double alternance et le pôle négatif de l'élément de commutation étant connecté au pôle négatif du circuit redresseur à double alternance.

19. Générateur de rayons X selon la revendication 18, dans lequel les moyens de roue libre de courant (28) comportent des premiers moyens de roue libre de courant incluant des première et deuxième diodes de roue libre (28a, 28b), et des seconds moyens de roue libre de courant incluant des troisième et quatrième diodes de roue libre (28c, 28d), dans lequel :

les premiers moyens de roue libre de courant sont tels que la première diode de roue libre est connectée de sorte que le pôle positif du premier commutateur bidirectionnel (40a-42a) est rendu conducteur jusqu'au pôle positif de la source de courant continu, et la deuxième diode de roue libre est connectée de sorte que le pôle négatif de la source de courant continu est rendu conducteur jusqu'au pôle négatif du premier commutateur bidirectionnel, et

les deuxièmes moyens de roue libre de courant sont tels que la troisième diode de roue libre est connectée de sorte que le pôle positif du second commutateur bidirectionnel (40b-42b) est rendu conducteur jusqu'au pôle positif de la source de courant continu, et la quatrième diode de roue libre est connectée de sorte que le pôle négatif de la source de courant continu est rendu conducteur jusqu'au pôle négatif du second commutateur bidirectionnel.

20. Générateur de rayons X selon la revendication 18, dans lequel les moyens de roue libre de courant (28) comportent des premiers moyens de roue libre de courant incluant des première à quatrième diodes de roue libre (28a, 28a', 28b, 28b'), et des deuxièmes moyens de roue libre de courant incluant des cinquième à huitième diodes de roue libre (28c, 28c', 28d, 28d'), dans lequel :

les premiers moyens de roue libre de courant sont tels qu'un point de connexion d'un corps de connexion série de l'anode de la première diode de roue libre et de la cathode de la deuxième diode de roue libre est connecté à une extrémité du premier commutateur bidirectionnel (40a-42a), la cathode de la première diode de roue libre est connectée au pôle positif de la première source de courant continu, l'anode de la deuxième diode de roue libre est connectée au pôle négatif de la seconde source de courant continu, un point de connexion d'un corps de connexion série de l'anode de la troisième diode de roue libre et de la cathode de la quatrième diode de roue libre est connecté à une autre extrémité du premier commutateur bidirectionnel, la cathode de la troisième diode de roue libre est connectée au pôle positif de la première source de courant continu, et l'anode de la quatrième diode de roue libre est connectée au pôle négatif de la seconde source de courant continu, et

les deuxièmes moyens de roue libre de courant sont tels qu'un point de connexion d'un corps de connexion série de l'anode de la cinquième diode de roue libre et de la cathode de la sixième diode de roue libre est connecté à une extrémité du second commutateur bidirectionnel (40b-42b), la cathode de la cinquième diode de roue libre est connectée au pôle positif de la première source de courant continu, l'anode de la sixième diode de roue libre est connectée au pôle négatif de la seconde source de courant continu, un point de connexion d'un corps de connexion série de l'anode de la septième diode de roue libre et de la cathode de la huitième diode de roue libre est connecté à une extrémité du second commutateur bidirectionnel, la cathode de la septième diode de roue libre est connectée au pôle positif de la première source de courant continu, et l'anode de la huitième diode de roue libre est connectée au pôle négatif de la seconde source de courant continu.

21. Générateur de rayons X selon la revendication 18, dans lequel les moyens de roue libre de courant (28) comportent des premiers moyens de roue libre de courant incluant des première et deuxième diodes de roue libre (28a, 28b), et des deuxièmes moyens de roue libre de courant incluant des troisième et quatrième diodes de roue libre (28c, 28d), dans lequel :

les premiers moyens de roue libre de courant sont tels qu'un point de connexion d'un corps de connexion série de l'anode de la première diode de roue libre et de la cathode de la deuxième diode de roue libre est connecté à une extrémité du premier commutateur bidirectionnel (40a-42a), et la cathode de la première diode de roue libre est connectée au pôle positif de la première source de courant continu, l'anode de la deuxième diode de roue libre est connectée au pôle négatif de la seconde source de courant continu, et

les deuxièmes moyens de roue libre de courant sont tels qu'un point de connexion d'un corps de connexion série de l'anode de la troisième diode de roue libre et de la cathode de la quatrième diode de roue libre est connecté à une extrémité du second commutateur bidirectionnel (40b-42b), la cathode de la troisième diode de roue libre est connectée au pôle positif de la première source de courant continu, et l'anode de la quatrième diode de roue libre est connectée au pôle négatif de la seconde source de courant continu.

**Fig. 1**

4 BOOSTER TYPE HIGH POWER FACTOR AC/DC CONVERTER

5 SOFT SWITCHING INVERTER

8 HIGH-VOLTAGE TRANSFORMER

108 SCANNER ROTATING UNIT

80 X-RAY GENERATOR

14 ANODE ROTATION DRIVER

Vdc

9 HIGH-VOLTAGE RECTIFIER

10 CAPACITOR

1 AC POWER SOURCE

102a
102b
111a
111b
102c
111c

30a 30b 30c

31a
31b
1c

32 21
33

6 7

X-RAY TUBE

CONVERTER CONTROLLER

INVERTER CONTROLLER

TUBE VOLTAGE

11 X-RAYS

PHASE CURRENT

12

13

116 DETECTOR

SUBJECT

110 IMAGE DISPLAY

112

IMAGE PROCESSOR

102d
111d

117 AMPLIFIER

TRANSMITTED X-RAYS

107 X-RAY DETECTING UNIT

EP 1 298 780 B1

Fig. 2

5 SOFT SWITCHING INVERTER

PC POWER SOURCE Vdc

8 HIGH-VOLTAGE TRANSFORMER

11 X-RAY TUBE

9 HIGH-VOLTAGE RECTIFIER

DRIVER

PHASE CONTROLLER

PHASE DETERMINER

TUBE VOLTAGE SETTING SIGNAL S1

TUBE CURRENT SETTING SIGNAL S2

X-RAY IRRADIATION SIGNAL S4

EP 1 298 780 B1

## Fig. 3

φ : PHASE SHIFT ANGLE
Td : DEAD TIME

(a) 1ST SW 20a
(b) 2ND SW 20b
(c) 3RD SW 20c
(d) 4TH SW 20d
(e) AUXILIARY SW 24a1
(f) AUXILIARY SW 24a2
(g) CURRENT OF INDUCTOR 23a

## Fig. 4

φ : PHASE SHIFT ANGLE
Td : DEAD TIME

(a) 1ST SW 20a
(b) 2ND SW 20b
(c) 3RD SW 20c
(d) 4TH SW 20d
(e) AUXILIARY SW 24a1
(f) AUXILIARY SW 24a2
(g) CURRENT OF INDUCTOR 23a

# Fig. 5A

# Fig. 5B

Fig. 6A

Fig. 6B

Fig. 7

## Fig. 8

## Fig. 13

## Fig. 9A

## Fig. 9B

# Fig. 10

5 SOFT SWITCHING INVERTER

8 HIGH-VOLTAGE TRANSFORMER

## Fig11A

42a

41a1

41a3

40a1

41a2

41a4

## Fig. 11B

42a

41a1

41a3

40a1

41a2

41a4

## Fig. 12A

## Fig. 12B